(19) **Europäisches Patentamt / European Patent Office / Office européen des brevets**

(11) **EP 4 481 010 A1**

(12) **EUROPEAN PATENT APPLICATION**
published in accordance with Art. 153(4) EPC

(43) Date of publication:
**25.12.2024  Bulletin 2024/52**

(21) Application number: **23756442.2**

(22) Date of filing: **16.02.2023**

(51) International Patent Classification (IPC):
**C09D 201/08** $^{(2006.01)}$  **B05D 1/36** $^{(2006.01)}$
**B05D 7/24** $^{(2006.01)}$  **C09D 5/00** $^{(2006.01)}$
**C09D 7/63** $^{(2018.01)}$  **C09D 161/28** $^{(2006.01)}$
**C09D 133/00** $^{(2006.01)}$  **C09D 175/04** $^{(2006.01)}$

(52) Cooperative Patent Classification (CPC):
**B05D 1/36; B05D 7/24; C09D 5/00; C09D 7/63;**
**C09D 161/28; C09D 201/08;** C09D 133/00;
C09D 175/04

(86) International application number:
**PCT/JP2023/005462**

(87) International publication number:
**WO 2023/157917 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.02.2022  JP 2022023346**

(71) Applicant: **Kansai Paint Co., Ltd.**
**Amagasaki-shi, Hyogo 661-8555 (JP)**

(72) Inventor: **UZAWA, Yuji**
**Hiratsuka-shi, Kanagawa 254-8562 (JP)**

(74) Representative: **Gill Jennings & Every LLP**
**The Broadgate Tower**
**20 Primrose Street**
**London EC2A 2ES (GB)**

(54) **AQUEOUS COATING MATERIAL COMPOSITION AND METHOD FOR FORMING MULTILAYER COATING FILM**

(57) The purpose of the present disclosure is to provide an aqueous coating material composition that has exceptional storage stability and can exhibit high coating film performance and glass adhesiveness even when cured at a comparatively low temperature. An aqueous coating material composition containing (A) a hydroxyl-group- and carboxyl-group-containing resin, (B) an aqueous dispersion of a blocked polyisocyanate compound, and (C) a polycarbodiimide compound, wherein the (B) aqueous dispersion of a blocked polyisocyanate compound contains a blocked polyisocyanate compound (bl) and at least one anionic surfactant (b2) selected from sulfonates and sulfates.

EP 4 481 010 A1

**Description**

Technical Field

The present disclosure relates to an aqueous coating composition and a method of forming a multilayer coating film.

Background Art

In automobile coating, a method of forming a multilayer coating film by a three-coat two-bake (3C2B) system in which an electrodeposition coating material is applied to an object to be coated, followed by application of an intermediate coating material → baking and curing → application of an aqueous base coating material → preheating → application of a clear coating material → baking and curing is widely employed. In recent years, from the perspective of energy conservation, a three-coat one-bake (3C1B) system is becoming popular, in which the baking and curing process after application of an intermediate coating material is omitted, and an electrodeposition coating material is applied to an object to be coated, followed by application of an aqueous intermediate coating material → preheating as needed → application of an aqueous base coating material → preheating → application of a clear coating material → baking and curing.

Recently, it has been required to lower a heating temperature in the baking and curing process to further reduce energy to be used.

However, a coating composition having high curability even when the heating temperature is relatively low generally has high reactivity, and sufficient coating film performance such as hardness, chipping resistance, and water resistance and sufficient storage stability sometimes cannot be achieved at the same time.

In production specifications for automobiles, a member such as a glass member such as a windshield or a rear glass generally has an adhesive layer formed on a multilayer coating film and is fixed on the multilayer coating film via the adhesive layer. However, when an attempt is made to improve the chipping resistance by, for example, softening the intermediate coating film, the multilayer coating film under the adhesive layer may cause cohesive failure, or peeling may occur at an interface between the electrodeposition coating film and the intermediate coating film, resulting in poor adhesion to the member.

Patent Document 1 describes a method of forming a multilayer coating film in which the following steps (1) to (4) are sequentially performed on an electrodeposition-coated alloyed hot-dip galvanized steel sheet.

Step (1): applying an aqueous intermediate coating material (A) onto an electrodeposition coating film to form an intermediate coating film;
Step (2): performing preheating and then applying an aqueous base coating material (B) onto the intermediate coating film to form a base coating film;
Step (3): performing preheating and then applying a clear coating material (C) onto the base coating film to form a clear coating film;
Step (4): heating and curing the intermediate coating film, the base coating film, and the clear coating film formed in the steps (1) to (3).

The aqueous intermediate coating material (A) contains a hydroxyl group-containing acrylic resin (a1) having a glass transition temperature (Tg) in a range from 5 to 15°C and having a weight-average molecular weight in a range from 30000 to 40000, a polyurethane resin (a2) having a glass transition temperature (Tg) of -50°C or less and having a polyether backbone, a hydroxyl group-containing polyester resin (a3), a melamine resin (a4), and an active methylene-blocked polyisocyanate compound (a5). The use ratio of the hydroxyl group-containing acrylic resin (a1) to the polyurethane resin (a2) is in a range from 20/10 to 30/10 in terms of solid content ratio. A coating film formed after heating and curing the aqueous intermediate coating material (A) has an elongation at break at 20°C in a range from 20 to 30%, a Young's modulus in a range from 5000 to 6000 kgf/cm2, and a Tukon hardness in a range from 4 to 6. The clear coating material (C) contains a hydroxyl group-containing acrylic resin (c1) and an allophanate group-containing polyisocyanate compound (c2).

Although the method of forming a multilayer coating film above provides good glass adhesiveness, coating film performance, and storage stability, it has become desirable in recent years from the viewpoint of energy conservation to lower the heating temperature.

Citation List

Patent Document

Patent Document 1: JP 2019-198861 A

Summary of Invention

Technical Problem

The present disclosure aims to provide an aqueous coating composition that has excellent storage stability and that can exhibit high coating film performance and strong glass adhesiveness even when cured at a relatively low temperature.

Solution to Problem

As a result of intensive studies to achieve the above object, the present disclosures have found that the above object can be achieved by an aqueous coating composition containing a hydroxyl group- and carboxyl group-containing resin (A); a blocked polyisocyanate compound aqueous dispersion (B); and a polycarbodiimide compound (C), wherein blocked polyisocyanate compound aqueous dispersion (B) contains a blocked polyisocyanate compound (b1) and at least one anionic surfactant (b2) selected from sulfonic acid salts and sulfuric ester salts.

The present disclosure provides an aqueous coating composition and a method of forming a multilayer coating film including the following aspects.

Aspect 1. An aqueous coating composition containing: a hydroxyl group- and carboxyl group-containing resin (A); a blocked polyisocyanate compound aqueous dispersion (B); and a polycarbodiimide compound (C), wherein the blocked polyisocyanate compound aqueous dispersion (B) contains a blocked polyisocyanate compound (b1) and at least one anionic surfactant (b2) selected from sulfonic acid salts and sulfuric ester salts.

Aspect 2. The aqueous coating composition according to Aspect 1, wherein at least a portion of a blocking agent of the blocked polyisocyanate compound (b1) is an active methylene-based blocking agent.

Aspect 3. The aqueous coating composition according to Aspect 1 or 2, wherein a content of the anionic surfactant (b2) is in a range from 0.1 to 10 parts by mass based on 100 parts by mass of a solid content of the blocked polyisocyanate compound (b1).

Aspect 4. The aqueous coating composition according to any one of Aspects 1 to 3, further containing a melamine resin (D).

Aspect 5. A method of forming a multilayer coating film including, in sequence:

(1) applying the aqueous coating composition according to any one of Aspects 1 to 4 onto an object to be coated to form an intermediate coating film;
(2) applying an aqueous basecoat coating composition onto the intermediate coating film formed in (1) to form a basecoat coating film;
(3) applying a clear coating composition onto the basecoat coating film formed in (2) to form a clear coating film; and
(4): heating and curing all at once the intermediate coating film, the base coating film, and the clear coating film formed in (1) to (3).

Advantageous Effects of Invention

The aqueous coating composition according to an embodiment of the present disclosure has excellent storage stability and forms a coating film demonstrating good glass adhesiveness and excellent coating film performance such as high hardness and water resistance even when cured at a relatively low temperature.

Description of Embodiments

Hereinafter, the aqueous coating composition according to an embodiment of the present disclosure (hereinafter sometimes referred to as "the present coating material") will be described in more detail.

[Aqueous Coating Composition]

The aqueous coating composition according to an embodiment of the present disclosure is an aqueous coating composition containing: a hydroxyl group- and carboxyl group-containing resin (A); a blocked polyisocyanate compound aqueous dispersion (B); and a polycarbodiimide compound (C). The blocked polyisocyanate compound aqueous dispersion (B) contains a blocked polyisocyanate compound (b1) and at least one anionic surfactant (b2) selected from sulfonic acid salts and sulfuric ester salts.

In the present specification, the aqueous paint is a term used in contrast to an organic solvent-based paint and usually means a paint formed by dispersing and/or dissolving a coating film-forming resin, a pigment, and the like in water or a medium containing water as a main component (aqueous media). In addition, the organic solvent-based paint is a paint containing substantially no water as a solvent or containing only or almost only an organic solvent as a solvent.

The aqueous coating composition according to an embodiment of the present disclosure has a pH preferably in a range from 7.0 to 11.5, more preferably in a range from 7.5 to 11.0, and even more preferably in a range from 8.0 to 10.5, from the viewpoint of forming a coating film having excellent storage stability and exhibiting excellent coating film performance such as high hardness and water resistance and good glass adhesiveness.

[Hydroxyl Group- and Carboxyl Group-Containing Resin (A)]

The hydroxyl group- and carboxyl group-containing resin (A) is not limited as long as it contains a hydroxyl group and a carboxyl group. Specific examples of the type of the resin include an acrylic resin, a polyester resin, a polyether resin, a polycarbonate resin, and a polyurethane resin. In particular, the hydroxyl group- and carboxyl group-containing resin (A) is preferably an acrylic resin (A1), a polyester resin, or a polyurethane resin containing a hydroxyl group and a carboxyl group.

[Hydroxyl Group- and Carboxyl Group-Containing Acrylic Resin (A1)]

The hydroxyl group- and carboxyl group-containing acrylic resin (A1) can be synthesized by copolymerizing a hydroxyl group-containing polymerizable unsaturated monomer (M-1), a carboxyl group-containing polymerizable unsaturated monomer (M-2), and an additional copolymerizable polymerizable unsaturated monomer (M-3) by a known method.

The hydroxyl group-containing polymerizable unsaturated monomer (M-1) is a compound having one hydroxyl group and one polymerizable unsaturated bond per molecule, with the hydroxyl group mainly acting as a functional group that reacts with a cross-linking agent. Examples of the hydroxyl group-containing polymerizable unsaturated monomer include a monoesterified product of acrylic acid or methacrylic acid and a polyhydric alcohol. A specifically preferable one is a monoesterified product of acrylic acid or methacrylic acid and a dihydric alcohol having from 2 to 10 carbon atoms, such as 2-hydroxyethyl (meth)acrylate, 2-hydroxypropyl (meth)acrylate, and 4-hydroxybutyl (meth)acrylate.

In addition to the above-mentioned compounds, examples of the monoesterified product of acrylic acid or methacrylic acid and a polyhydric alcohol include compounds in which a ring-opening polymer such as ε-caprolactone is further added to a monoesterified product of 2-hydroxyethyl (meth)acrylate or the like. Examples of such compounds include: "Placcel FA-1", "Placcel FA-2", "Placcel FA-3", "Placcel FA-4", "Placcel FA-5", "Placcel FM-1", "Placcel FM-2", "Placcel FM-3", "Placcel FM-4", and "Placcel FM-5" (product names, all manufactured by Daicel Corporation); polyethylene glycol mono(meth)acrylate and polypropylene glycol mono(meth)acrylate; 2-hydroxy-3-phenoxypropyl (meth)acrylate and 2-hydroxy-3-butoxypropyl (meth)acrylate; and phthalic acid monohydroxyethyl (meth)acrylate. These can be used alone or in combination of two or more types.

However, in the present disclosure, the monomers corresponding to "(xvi) Polymerizable unsaturated monomers having a UV-absorbing functional group" described below, even when having a hydroxyl group, should be defined as the above-described "additional copolymerizable polymerizable unsaturated monomer (M-3)" and are excluded from the "hydroxyl group-containing polymerizable unsaturated monomer (M-1)".

The carboxyl group-containing polymerizable unsaturated monomer (M-2) is a compound having one or more carboxyl groups and one polymerizable unsaturated bond per molecule, and examples thereof include acrylic acid, methacrylic acid, crotonic acid, itaconic acid, maleic acid, and maleic anhydride. These can be used alone or in combination of two or more types.

The additional copolymerizable polymerizable unsaturated monomer (M-3) is a compound that has one or more polymerizable unsaturated bonds per molecule and that is neither the monomer (M-1) nor (M-2), and specific examples thereof are listed below.

(i) Alkyl or cycloalkyl (meth)acrylates: for example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate.

(ii) Polymerizable unsaturated monomers having an isobornyl group: such as isobornyl (meth)acrylate.

(iii) Polymerizable unsaturated monomers having an adamantyl group: such as adamantyl (meth)acrylate.

(iv) Polymerizable unsaturated monomers having a tricyclodecenyl group: such as tricyclodecenyl (meth)acrylate.

(v) Aromatic ring-containing polymerizable unsaturated monomers: such as benzyl (meth)acrylate, styrene, α-methylstyrene, and vinyl toluene.

(vi) Polymerizable unsaturated monomers having an alkoxysilyl group: such as vinyltrimethoxysilane, vinyltriethoxysilane, vinyltris(2-methoxyethoxy)silane, γ-(meth)acryloyloxypropyltrimethoxysilane, and y-(meth)acryloyloxypropyltriethoxysilane.

(vii) Polymerizable unsaturated monomers having a fluorinated alkyl group: such as perfluoroalkyl (meth)acrylates such as perfluorobutylethyl (meth)acrylate and perfluorooctylethyl (meth)acrylate; and fluoroolefins.

(viii) Polymerizable unsaturated monomers having a photopolymerizable functional group: such as a maleimide group.

(ix) Vinyl compounds: such as N-vinylpyrrolidone, ethylene, butadiene, chloroprene, vinyl propionate, and vinyl acetate.

(x) Nitrogen-containing polymerizable unsaturated monomers: such as (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, and adducts of glycidyl (meth)acrylate and amine compounds.

(xi) Polymerizable unsaturated monomers having two or more polymerizable unsaturated groups per molecule: such as allyl (meth)acrylate, ethylene glycol di(meth)acrylate, 1,4-butanediol di(meth)acrylate, neopentyl glycol di(meth)acrylate, and 1,6-hexanediol di(meth)acrylate.

(xii) Epoxy group-containing polymerizable unsaturated monomers: such as glycidyl (meth)acrylate, β-methylglycidyl (meth)acrylate, 3,4-epoxycyclohexyl methyl(meth)acrylate, 3,4-epoxycyclohexyl ethyl(meth)acrylate, 3,4-epoxycyclohexylpropyl (meth)acrylate, and allyl glycidyl ether.

(xiii) (Meth)acrylates having a polyoxyethylene chain with an alkoxy group at a molecular terminal thereof.

(xiv) Polymerizable unsaturated monomers having a sulfonic acid group: such as 2-acrylamido-2-methylpropane sulfonic acid, 2-sulfoethyl (meth)acrylate, allyl sulfonic acid, 4-styrene sulfonic acid, and sodium salts and ammonium salts of these sulfonic acids.

(xv) Polymerizable unsaturated monomers having a phosphate group: such as acid phosphoxyethyl (meth)acrylate, acid phosphoxypropyl (meth)acrylate, acid phosphoxypoly(oxyethylene)glycol (meth)acrylate, and acid phosphoxypoly(oxypropylene)glycol (meth)acrylate.

(xvi) Polymerizable unsaturated monomers having a UV-absorbing functional group: such as 2-hydroxy-4(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy) benzophenone, 2,2'-dihydroxy-4-(3-acryloyloxy-2-hydroxypropoxy)benzophenone, and 2-[2-hydroxy-5-[2-(methacryloyloxy)ethyl]phenyl]-2H-benzotriazole.

(xvii) Photostable polymerizable unsaturated monomers: such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine.

(xviii) Polymerizable unsaturated monomers having a carbonyl group: such as acrolein, diacetone acrylamide, diacetone methacrylamide, acetoacetoxy ethyl methacrylate, formylstyrol, and vinyl alkyl ketones having from 4 to 7 carbon atoms (for example, vinyl methyl ketone, vinyl ethyl ketone, and vinyl butyl ketone).

(xix) Polymerizable unsaturated monomers having an acid anhydride group: such as maleic anhydride, itaconic anhydride, and citraconic anhydride.

In the present specification, a polymerizable unsaturated group means an unsaturated group that is radically polymerizable. Examples of such polymerizable unsaturated groups include a vinyl group and a (meth)acryloyl group.

Also, in the present specification, "(meth)acrylate" means acrylate and/or methacrylate. "(Meth)acrylic acid" means acrylic acid and/or methacrylic acid. In addition, "(meth)acryloyl" means acryloyl and/or methacryloyl. Furthermore, "(meth)acrylamide" means acrylamide and/or methacrylamide.

In producing the hydroxyl group- and carboxyl group-containing acrylic resin (A1), the proportion of the hydroxyl group-containing polymerizable unsaturated monomer (M-1) to be used is preferably from 1 to 50 mass%, more preferably from 2 to 40 mass%, and even more preferably from 3 to 30 mass%, based on the total amount of the monomer components.

From the viewpoints of the curability, chipping resistance, adhesion, hardness, finished appearance, glass adhesiveness, and the like of the resulting coating film, the hydroxyl group- and carboxyl group-containing acrylic resin (A1) preferably has a hydroxyl value from 1 to 150 mg KOH/g, more preferably from 2 to 120 mg KOH/g, and even more preferably from 5 to 100 mg KOH/g.

In producing the hydroxyl group- and carboxyl group-containing acrylic resin (A1), the proportion of the carboxyl group-containing polymerizable unsaturated monomer (M-2) to be used is preferably from 1 to 50 mass%, more preferably from 2 to 40 mass%, and even more preferably from 3 to 30 mass%, based on the total amount of the monomer components.

From the viewpoint of the storage stability of the coating material, the water resistance of the resulting coating film, and the like, the hydroxyl group- and carboxyl group-containing acrylic resin (A1) preferably has an acid value from 1 to 80 mg KOH/g, more preferably from 5 to 50 mg KOH/g, and even more preferably from 5 to 30 mg KOH/g.

When the aqueous coating composition according to an embodiment of the present disclosure contains the hydroxyl group- and carboxyl group-containing acrylic resin (A1), the content of the hydroxyl group- and carboxyl group-containing acrylic resin (A1) is preferably from 2 to 70 mass%, more preferably from 5 to 50 mass%, and even more preferably from 10 to 40 mass%, based on a resin solid content amount in the aqueous coating composition.

Further, the hydroxyl group- and carboxyl group-containing acrylic resin (A1) is preferably hydroxyl group- and carboxyl group-containing acrylic resin particles (A1') having a core-shell structure.

[Hydroxyl Group- and Carboxyl Group-Containing Acrylic Resin Particles (A1') Having a Core-Shell Structure]

In the present disclosure, a "shell portion" of the hydroxyl group- and carboxyl group-containing acrylic resin particles (A1') having a core-shell structure" refers to a polymer layer present in the outermost layer of the resin particles, a "core portion" refers to a polymer layer of the inner layer of the resin particles excluding the shell portion, and "having a core-shell structure" means a structure having the core portion and the shell portion.

Note that hereinafter, the "hydroxyl group- and carboxyl group-containing acrylic resin particles (A1') having a core-shell structure" may be simply referred to as "hydroxyl group- and carboxyl group-containing acrylic resin particles (A1')".

The core-shell structure described above is typically a layer structure in which the core portion is completely covered by the shell portion. However, depending on the mass ratio and the like of the core portion to the shell portion, the amount of the monomer of the shell portion may be insufficient to form a layer structure. In such a case, it is not necessary to have a complete layer structure as described above, and the structure may be a structure in which a part of the core portion is covered by the shell portion.

The hydroxyl group- and carboxyl group-containing acrylic resin particles (A1') are typically acrylic resin particles in which each particle is composed of a core portion and a shell portion. The core portion is a copolymer (I) containing a polymerizable unsaturated monomer as a copolymerization component, while the shell portion is a copolymer (II) containing a polymerizable unsaturated monomer as a copolymerization component. The polymerizable unsaturated monomers can be an appropriate combination of the polymerizable unsaturated monomers (M-1) to (M-3) described above.

A crosslinked structure can be imparted to the copolymer by using the aforementioned polymerizable unsaturated monomer having two or more polymerizable unsaturated groups per molecule as the polymerizable unsaturated monomer above. When the polymerizable unsaturated monomer having two or more polymerizable unsaturated groups per molecule is used, the proportion thereof to be used can be appropriately determined depending on the degree of crosslinking of the copolymer. Usually, the proportion is in a range preferably approximately from 0.1 to 30 mass%, more preferably approximately from 0.5 to 10 mass%, and even more preferably approximately from 1 to 7 mass%, based on the total amount of the polymerizable unsaturated monomers (M-1) to (M-3).

The hydroxyl group- and carboxyl group-containing acrylic resin particles (A1') can be produced by subjecting a polymerizable unsaturated monomer mixture to emulsion-polymerization to prepare an emulsion of the core portion copolymer (I), adding a polymerizable unsaturated monomer mixture to the resulting emulsion, and further subjecting the resulting mixture to emulsion-polymerization to prepare the shell portion copolymer (II).

The emulsion-polymerization for preparing an emulsion of the core portion copolymer (I) can be carried out by a known method. For example, the emulsion-polymerization can be carried out by subjecting a polymerizable unsaturated monomer mixture to emulsion polymerization using a polymerization initiator in the presence of an emulsifier.

Suitable examples of the emulsifier include an anionic emulsifier and a nonionic emulsifier.

Examples of the anionic emulsifier include sodium salts and ammonium salts of alkylsulfonic acids, alkylbenzenesulfonic acids, alkylphosphoric acids, and the like. Examples of the nonionic emulsifier include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate, and polyoxyethylene sorbitan monolaurate.

Alternatively, a polyoxyalkylene group-containing anionic emulsifier having, per molecule, an anionic group and a polyoxyalkylene group such as a polyoxyethylene group or a polyoxypropylene group may be used, or a reactive anionic emulsifier having, per molecule, an anionic group and a radically polymerizable unsaturated group may be used as the anionic emulsifier.

Examples of the reactive anionic emulsifier include sodium salts of sulfonic acid compounds having a radically polymerizable unsaturated group, such as an allyl group, a methallyl group, a (meth)acryloyl group, a propenyl group, and a butenyl group, and ammonium salts of such sulfonic acid compounds.

The emulsifier is used in an amount in a range preferably approximately from 0.1 to 15 mass%, more preferably approximately from 0.5 to 10 mass%, and even more preferably approximately from 1 to 5 mass%, based on the total amount of all monomers used.

Examples of the polymerization initiator include organic peroxides, such as benzoyl peroxide, octanoyl peroxide, lauroyl peroxide, stearoyl peroxide, cumene hydroperoxide, tert-butyl peroxide, tert-butyl peroxylaurate, tert-butyl peroxyisopropyl carbonate, tert-butyl peroxyacetate, and diisopropylbenzene hydroperoxide; azo compounds, such as azobis(isobutyronitrile), azobis(2,4-dimethylvaleronitrile), azobis(2-methylpropionitrile), azobis(2-methylbutyronitrile), 4,4'-azobis(4-cyanobutanoic acid), dimethyl azobis(2-methylproprionate), azobis[2-methyl-N-(2-hydroxyethyl)-propionamide], and azobis{ 2-methyl-N-[2-(1-hydroxybutyl)]-propionamide}; and persulfate salts, such as potassium persulfate, ammonium persulfate, and sodium persulfate. These polymerization initiators can be used alone or in a combination of two or more types. Furthermore, as necessary, a reducing agent such as sugar, sodium formaldehyde sulfoxylate, or an iron complex may be used in combination with the polymerization initiator to form a redox initiator.

Usually, the polymerization initiator is used in an amount in a range preferably approximately from 0.1 to 5 mass%, and more preferably approximately from 0.2 to 3 mass%, based on the total amount of all monomers used. The method of adding the polymerization initiator is not particularly limited, and can be appropriately selected according to a type, an amount, and the like of the polymerization initiator. For example, the polymerization initiator can be contained in a monomer mixture or an aqueous medium in advance, or can be added all at once or added dropwise at the time of polymerization.

The monomer mixture for forming the shell portion copolymer (II) may appropriately contain components such as the polymerization initiator, a chain transfer agent, a reducing agent, and an emulsifier, when necessary. In addition, the monomer mixture, while can be added dropwise as is, is preferably added dropwise as a monomer emulsion after being dispersed in an aqueous medium. The particle size of the monomer emulsion in this case is not particularly limited.

Examples of the method of polymerizing the monomer mixture for forming the shell portion copolymer (II) include a method of adding, all at once or gradually and dropwise, the monomer mixture or an emulsion thereof to the emulsion of the core portion copolymer (I), and heating the mixture to an appropriate temperature while stirring.

The hydroxyl group- and carboxyl group-containing acrylic resin particles (A1') produced in this way have a multi-layer structure with the copolymer (I) serving as the core portion and the copolymer (II) serving as the shell portion.

When the aqueous coating composition according to an embodiment of the present disclosure contains the hydroxyl group- and carboxyl group-containing acrylic resin particles (A1'), the content of the hydroxyl group- and carboxyl group-containing acrylic resin particles (A1') is preferably from 2 to 70 mass%, more preferably from 5 to 50 mass%, and even more preferably from 10 to 40 mass%, based on the resin solid content amount in the aqueous coating composition.

Further, in producing the hydroxyl group- and carboxyl group-containing acrylic resin particles (A1'), a step of supplying a polymerizable unsaturated monomer (one type or a mixture of two or more types) for forming another resin layer and carrying out emulsion polymerization can be added between the step of preparing the core portion copolymer (I) and the step of preparing the shell portion copolymer (II). When the step is added, a gradient polymer layer is preferably formed as an additional layer, and the resulting product is preferably hydroxyl group-and carboxyl group-containing acrylic resin particles (A1") having a core-shell structure and containing a gradient polymer layer.

[Hydroxyl Group- and Carboxyl Group-Containing Acrylic Resin Particles (A1") Having a Core-Shell Structure and Containing a Gradient Polymer Layer]

In the present disclosure, the gradient polymer layer of the "hydroxyl group- and carboxyl group-containing acrylic resin particles (A1") having a core-shell structure and containing a gradient polymer layer" means a polymer layer having a layer structure in which the composition continuously changes (having a compositional gradient).

More specifically, the gradient polymer layer means a polymer layer having a compositional gradient in which the monomer (monomer mixture) composition continuously changes from monomer A (monomer mixture A) to monomer B (monomer mixture B), for example.

Note that hereinafter, the "hydroxyl group- and carboxyl group-containing acrylic resin particles (A1") having a core-shell structure and containing a gradient polymer layer" may be simply referred to as "hydroxyl group- and carboxyl group-containing acrylic resin particles (A1")".

The gradient polymer layer usually can be produced by a known polymerization method called power feed polymerization. Specifically, for example, when two types of monomers, monomer A (monomer mixture A) and monomer B (monomer mixture B), are subjected to a polymerization reaction, the gradient polymer layer can be produced by adding the monomer B (monomer mixture B) dropwise into a container containing the monomer A (monomer mixture A) and, at the same time, introducing the monomer A (monomer mixture A) into a reaction vessel to perform a polymerization reaction.

In the power feed polymerization, a gradient polymer layer having a desired compositional gradient can be formed by setting the synthesis conditions [such as the timing to start mixing the monomer A (monomer mixture A) and the monomer B (monomer mixture B), the speed of adding the monomer B (monomer mixture B) dropwise into the container containing the monomer A (monomer mixture A), and the speed of introducing the monomer A (monomer mixture A) into the reaction vessel).

From the viewpoint of the water resistance of the resulting coating film, the proportion of the gradient polymer layer in the hydroxyl group- and carboxyl group-containing acrylic resin particles (A1") is preferably approximately from 20 to 80 mass%, particularly preferably approximately from 25 to 75 mass%, and more particularly preferably approximately from 30 to 70 mass%, based on the total amount of all copolymer components of the hydroxyl group- and carboxyl group-containing acrylic resin particles (A1").

From the viewpoints of the curability, chipping resistance, adhesion, finished appearance, glass adhesiveness, and the like of the resulting coating film, the hydroxyl group- and carboxyl group-containing acrylic resin particles (A1") preferably have a hydroxyl value from 1 to 150 mg KOH/g, more preferably from 2 to 120 mg KOH/g, and even more preferably from 5 to 100 mg KOH/g.

From the viewpoints of the water resistance and chipping resistance of the resulting coating film, the core portion of the hydroxyl group- and carboxyl group-containing acrylic resin particles (A1") preferably has a hydroxyl value from 0 to 150 mg KOH/g, more preferably from 5 to 120 mg KOH/g, and even more preferably from 10 to 100 mg KOH/g.

From the viewpoints of the water resistance, chipping resistance, and glass adhesiveness of the resulting coating film, the shell portion of the hydroxyl group- and carboxyl group-containing acrylic resin particles (A1") preferably has a hydroxyl value from 0 to 150 mg KOH/g, more preferably from 2 to 120 mg KOH/g, and even more preferably from 5 to 100 mg KOH/g.

From the viewpoints of the storage stability of the coating material, the water resistance of the resulting coating film, and the like, the hydroxyl group- and carboxyl group-containing acrylic resin particles (A1") preferably have an acid value from 1 to 80 mg KOH/g, more preferably from 5 to 50 mg KOH/g, and even more preferably from 5 to 30 mg KOH/g.

From the viewpoints of the manufacturing stability and storage stability of the coating material, the core portion of the hydroxyl group- and carboxyl group-containing acrylic resin particles (A1") preferably has an acid value from 0 to 50 mg KOH/g, more preferably from 0 to 30 mg KOH/g, and even more preferably from 0 to 10 mg KOH/g.

From the viewpoints of the storage stability of the coating material and the water resistance of the resulting coating film, the shell portion of the hydroxyl group- and carboxyl group-containing acrylic resin particles (A1") preferably has an acid value from 1 to 100 mg KOH/g, more preferably from 5 to 80 mg KOH/g, and even more preferably from 10 to 50 mg KOH/g.

From the viewpoints of the water resistance, chipping resistance, glass adhesiveness, and the like of the resulting coating film, the hydroxyl group- and carboxyl group-containing acrylic resin particles (A1") preferably have a glass transition temperature from -20 to 100°C, more preferably from 0 to 100°C, and even more preferably from 20 to 100°C.

From the viewpoints of the water resistance, chipping resistance, and glass adhesiveness of the resulting coating film, the core portion of the hydroxyl group- and carboxyl group-containing acrylic resin particles (A1") preferably has a glass transition temperature from -50 to 50°C, more preferably from -30 to 50°C, and even more preferably from 0 to 50°C.

From the viewpoint of the water resistance of the resulting coating film, the shell portion of the hydroxyl group- and carboxyl group-containing acrylic resin particles (A1") preferably has a glass transition temperature from 0 to 120°C, more preferably from 20 to 100°C, and even more preferably from 30 to 100°C.

In the present specification, the glass transition temperature (Tg) is calculated based on the following equations.

$$1/Tg\,(K) = (W1/T1) + (W2/T2) + \cdots\cdots (1)$$

$$Tg\,(°C) = Tg\,(K) - 273 \quad (2)$$

In the equations, W1, W2, and so on are the mass fractions of the monomers used for copolymerization, and T1, T2, and so on are the Tg (K) of the homopolymers of the monomers.

Note that, T1, T2, and so on are values according to Polymer Hand Book (Second Edition, J. Brandup, E. H. Immer gut, ed.) III, pp. 139-179. The glass transition temperature (Tg) used for cases where a Tg of a homopolymer of a monomer is unknown is assumed to be the static glass transition temperature, which is provided as follows. A sample is placed into a measuring cup of a differential scanning calorimeter "DSC-220U" (manufactured by Seiko Instruments, Inc.), and vacuum suction is performed to completely remove the solvent; then, the change in heat quantity is measured in a range from -20°C to +200°C at a temperature increase rate of 3°C/min, and the change point of the initial baseline at the low-temperature end is recorded as the static glass transition temperature.

When the aqueous coating composition according to an embodiment of the present disclosure contains the hydroxyl group- and carboxyl group-containing acrylic resin particles (A1"), the content of the hydroxyl group- and carboxyl group-containing acrylic resin particles (A1") is preferably from 2 to 70 mass%, more preferably from 5 to 50 mass%, and even more preferably from 10 to 40 mass%, based on the resin solid content amount in the aqueous coating composition.

[Hydroxyl Group- and Carboxyl Group-Containing Polyester Resin (A2)]

The hydroxyl group- and carboxyl group-containing polyester resin (A2) can be synthesized by an esterification reaction between a polybasic acid and a polyhydric alcohol according to a known method.

The polybasic acid is a compound having two or more carboxyl groups per molecule, and examples thereof include phthalic acid, isophthalic acid, terephthalic acid, succinic acid, adipic acid, azelaic acid, sebacic acid, tetrahydrophthalic acid, hexahydrophthalic acid, maleic acid, fumaric acid, itaconic acid, trimellitic acid, pyromellitic acid, and anhydrides thereof. The polyhydric alcohol is a compound having two or more hydroxyl groups per molecule, and examples thereof include: diols such as ethylene glycol, propylene glycol, 1,3-propanediol, 1,4-butanediol, 1,5-pentanediol, 1,6-hexanediol, 2,2-diethyl-1,3-propanediol, neopentyl glycol, 1,9-nonanediol, 1,4-cyclohexanediol, hydroxypivalic acid neopentyl glycol ester, 2-butyl-2-ethyl-1,3-propanediol, 3-methyl-1,5-pentanediol, 2,2,4-trimethylpentanediol, and hydrogenated bisphenol A, trihydric or higher polyol components such as trimethylolpropane, trimethylolethane, glycerin, and pentaerythritol, and hydroxycarboxylic acids such as 2,2-dimethylolpropionic acid, 2,2-dimethylolbutanoic acid, 2,2-dimethylolpentanoic acid, 2,2-dimethylolhexanoic acid, and 2,2-dimethyloloctanoic acid.

Furthermore, $\alpha$-olefin epoxides such as propylene oxide and butylene oxide, monoepoxy compounds such as "Cardura E10" (product name, a glycidyl ester of synthetic highly branched saturated fatty acid, manufactured by HEXION Specialty Chemicals), and the like may be reacted with an acid to introduce these compounds into the polyester resin.

The carboxyl group may be introduced into the polyester resin by, for example, a method in which the reaction product of the aforementioned esterification reaction between a polybasic acid and a polyhydric alcohol is further reacted with a polybasic acid, such as trimellitic acid or an anhydride thereof, such as trimellitic anhydride, or a method in which an acid anhydride is added to a hydroxyl group-containing polyester and subjected to half-esterification.

The hydroxyl group- and carboxyl group-containing polyester resin (A2) may also be a fatty acid-modified polyester resin modified with a (semi-) drying oil fatty acid, such as linseed oil fatty acid, coconut oil fatty acid, safflower oil fatty acid, soybean oil fatty acid, sesame oil fatty acid, perilla oil fatty acid, hemp oil fatty acid, tall oil fatty acid, and dehydrated castor oil fatty acid. The degree of modification by these fatty acids is generally preferably up to 30 mass% in terms of oil length. The hydroxyl group- and carboxyl group-containing polyester resin (A2) may be partially reacted with a monobasic acid such as benzoic acid.

Furthermore, during or after the preparation thereof, the hydroxyl group- and carboxyl group-containing polyester resin (A2) can be modified with a fatty acid, a monoepoxy compound, a polyisocyanate compound, an acrylic resin, or the like.

Examples of the fatty acid include coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid. A preferable example of the monoepoxy compound includes "Cardura E10P" (product name, a glycidyl ester of a synthetic highly-branched saturated fatty acid, manufactured by Hexion Inc.).

Examples of the polyisocyanate compound include aliphatic diisocyanate compounds, such as lysine diisocyanate, hexamethylene diisocyanate, and trimethylhexane diisocyanate; alicyclic diisocyanate compounds, such as hydrogenated xylylene diisocyanate, isophorone diisocyanate, methylcyclohexane-2,4-diisocyanate, methylcyclohexane-2,6-diisocyanate, 4,4'-methylenebis(cyclohexyl isocyanate), and 1,3-(isocyanatomethyl)cyclohexane; aromatic diisocyanate compounds, such as tolylene diisocyanate, xylylene diisocyanate, and diphenylmethane diisocyanate; organic polyisocyanates themselves, such as tri- or higher-valent polyisocyanates such as lysine triisocyanate; adducts of each of these organic polyisocyanates with a polyhydric alcohol, a low molecular weight polyester resin, or water; and cyclized polymers (for example, isocyanurate) and biuret-type adducts between or among these organic polyisocyanates. These polyisocyanate compounds can be used alone, or two or more types thereof can be mixed and used.

The method of modifying the hydroxyl group- and carboxyl group-containing polyester resin (A2) with an acrylic resin may be a known method, and examples of the method include a method of polymerizing a mixture of a polymerizable unsaturated group-containing polyester resin and a polymerizable unsaturated monomer, and a method of reacting a hydroxyl group- and carboxyl group-containing polyester resin and an acrylic resin with each other.

The hydroxyl group- and carboxyl group-containing polyester resin (A2) preferably has a hydroxyl value of from 1 to 250 mg KOH/g, more preferably from 2 to 200 mg KOH/g, and even more preferably from 5 to 200 mg KOH/g.

The hydroxyl group- and carboxyl group-containing polyester resin (A2) preferably has an acid value from 1 to 150 mg KOH/g, more preferably from 2 to 100 mg KOH/g, and even more preferably from 2 to 50 mg KOH/g.

The hydroxyl group- and carboxyl group-containing polyester resin (A2) preferably has a weight-average molecular weight from 3000 to 100000, more preferably from 4000 to 50000, and even more preferably from 5000 to 30000.

Note that in the present specification, the average molecular weight is a value calculated from a chromatogram measured by a gel permeation chromatograph calibrated with the molecular weight of standard polystyrene. For the gel permeation chromatograph, a "HLC-8120 GPC" (manufactured by Tosoh Corporation) is used. The gel permeation chromatography is performed using four columns "TSKgel G-4000HXL", "TSKgel G-3000HXL", "TSKgel G-2500HXL", and "TSKgel G-2000HXI," (product names, all manufactured by Tosoh Corporation) under conditions of a mobile phase of tetrahydrofuran, a measurement temperature of 40°C, a flow rate of 1 mL/min, and a detector of RI.

When the aqueous coating composition according to an embodiment of the present disclosure contains the hydroxyl group- and carboxyl group-containing polyester resin (A2), the content of the hydroxyl group- and carboxyl group-containing polyester resin (A2) is preferably from 2 to 70 mass%, more preferably from 5 to 50 mass%, and even more preferably from 5 to 40 mass%, based on the resin solid content amount in the aqueous coating composition.

[Hydroxyl Group- and Carboxyl Group-Containing Polyurethane Resin (A3)]

The hydroxyl group- and carboxyl group-containing polyurethane resin (A3) can be prepared by a known method, for example, by reacting a polyol with a polyisocyanate compound. After the reaction, chain extension may be carried out in the presence of a chain extender that is a low molecular weight compound having at least two active hydrogen atoms per molecule, such as a diol or a diamine. Furthermore, during or after the preparation the resin, modification may be performed with an acrylic resin or the like.

The polyol may be a polyol containing no carboxyl group or a carboxyl group-containing polyol containing a carboxyl group.

Examples of the polyol containing no carboxyl group include low-molecular-weight compounds (for example, dihydric alcohols such as ethylene glycol, diethylene glycol, propylene glycol, butylene glycol, and hexamethylene glycol, and trihydric alcohols such as trimethylolpropane, glycerin, and pentaerythritol) and high-molecular-weight compounds (for example, polyether polyols, polyester polyols, acrylic polyols, and epoxy polyols). Examples of the polyether polyol include polyethylene glycol, polypropylene glycol, and polytetramethylene glycol. Examples of the polyester polyol include a polycondensation product of an alcohol such as the above-mentioned dihydric alcohol, dipropylene glycol, 1,4-butanediol, 1,6-hexanediol, or neopentyl glycol and a dibasic acid such as adipic acid, azelaic acid, or sebacic acid; a lactone-based ring-opened polymer polyol such as polycaprolactone; and a polycarbonate polyol.

Examples of the carboxyl group-containing polyol include 2,2-dimethylolpropionic acid and 2,2-dimethylolbutanoic acid. In particular, 2,2-dimethylolpropionic acid is more preferable. When these compounds are used, a small amount of a solvent such as N-methylpyrrolidone may be used to speed up the reaction.

Examples of the polyisocyanate compound to be reacted with the polyol include: aliphatic polyisocyanates such as hexamethylene diisocyanate, trimethylhexamethylene diisocyanate, dimeric acid diisocyanate, and lysine diisocyanate, as well as biuret type adducts or isocyanurate ring adducts of these polyisocyanates; alicyclic diisocyanates such as isophorone diisocyanate, 4,4'-methylenebis(cyclohexylisocyanate), methylcyclohexane-2,4-(or 2,6-)diisocyanate, 1,3-(or 1,4-)di(isocyanatomethyl)cyclohexane, 1,4-cyclohexane diisocyanate, 1,3-cyclopentane diisocyanate, and 1,2-cyclohexane diisocyanate, as well as biuret type adducts or isocyanurate ring adducts of these polyisocyanates; aromatic diisocyanate compounds such as xylylene diisocyanate, metaxylylene diisocyanate, tetramethylxylylene diisocyanate, tolylene diisocyanate, 4,4'-diphenylmethane diisocyanate, 1,5-naphthalene diisocyanate, 1,4-naphthalene diisocyanate, 4,4-toluidine diisocyanate, 4,4'-diphenylether diisocyanate, (m-or p-)phenylene diisocyanate, 4,4'-biphenylene diisocyanate, 3,3'-dimethyl-4,4'-biphenylene diisocyanate, bis(4-isocyanatophenyl)sulfone, and isopropylidenebis-(4-phenylisocyanate), as well as biuret type adducts or isocyanurate ring adducts of these polyisocyanates; polyisocyanates having at least three isocyanate groups per molecule such as triphenylmethane-4,4',4"-triisocyanate, 1,3,5-triisocyanatobenzene, 2,4,6-triisocyanatotoluene, and 4,4'-dimethyldiphenylmethane-2,2',5,5'-tetraisocyanate, as well as biuret type adducts or isocyanurate ring adducts of these polyisocyanate compounds.

Examples of the diol serving as the chain extender include ethylene glycol, 1,4-butanediol, 1,5-pentanediol, 3-methyl-1,5-pentanediol, and cyclohexanediol. Examples of the diamine serving as the chain extender include ethylenediamine, propylenediamine, xylylenediamine, and N-(2-hydroxyethyl)ethylenediamine.

The hydroxyl group- and carboxyl group-containing polyurethane resin (A3) preferably has a hydroxyl value in a range from 1 to 250 mg KOH/g, more preferably from 2 to 200 mg KOH/g, and even more preferably from 5 to 200 mg KOH/g.

From the viewpoints of the manufacturing stability and water resistance of the resulting coating film, the hydroxyl group- and carboxyl group-containing polyurethane resin (A3) preferably has an acid value from 1 to 100 mg KOH/g, more preferably from 2 to 50 mg KOH/g, and even more preferably from 2 to 30 mg KOH/g.

The hydroxyl group- and carboxyl group-containing polyurethane resin (A3) preferably has a weight-average molecular weight of 3000 or greater, more preferably 5000 or greater, and even more preferably 10000 or greater.

When the aqueous coating composition according to an embodiment of the present disclosure contains the hydroxyl group- and carboxyl group-containing polyurethane resin (A3), the content of the hydroxyl group- and carboxyl group-containing polyurethane resin (A3) is preferably from 2 to 70 mass%, more preferably from 5 to 50 mass%, and even more preferably from 10 to 40 mass%, based on the resin solid content amount in the aqueous coating composition.

[Blocked Polyisocyanate Compound Aqueous Dispersion (B)]

The blocked polyisocyanate compound aqueous dispersion (B) contains a blocked polyisocyanate compound (b1) and at least one anionic surfactant (b2) selected from sulfonic acid salts and sulfuric ester salts.

[Blocked Polyisocyanate Compound (b1)]

The blocked polyisocyanate compound (b1) is a compound with an isocyanate group of a polyisocyanate compound (b11) blocked with a blocking agent (b12).

[Polyisocyanate Compound (b11)]

The polyisocyanate compound (b11) is a compound having at least two isocyanate groups per molecule, and examples thereof include aliphatic polyisocyanates, alicyclic polyisocyanates, aromatic-aliphatic polyisocyanates, aromatic polyisocyanates, derivatives of these polyisocyanates, and any combination of these polyisocyanates.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (commonly known as lysine diisocyanate); and aliphatic triisocyanates, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanates include: alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (commonly known as isophorone diisocyanate), 4-methyl-1,3-cyclohexylene diisocyanate (commonly known as hydrogenated TDI), 2-methyl-1,3-cyclohexylene diisocyanate, 1,3- or 1,4-bis(isocyanatomethyl)cyclohexane (commonly known as hydrogenated xylylene diisocyanate) or its mixture, methylenebis(4,1-cyclohexanediyl) diisocyanate (commonly known as hydrogenated MDI), and norbornane diisocyanate; and alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the aromatic-aliphatic polyisocyanates include: aromatic-aliphatic diisocyanates, such as methylenebis(4,1-phenylene) diisocyanate (commonly known as MDI), 1,3- or 1,4-xylylene diisocyanate or its mixture, co,co'-diisocyanato-1,4-diethylbenzene, and 1,3- or 1,4-bis(1-isocyanato-1-methylethyl)benzene (commonly known as tetramethylxylylene diisocyanate) or its mixture; and aromatic-aliphatic triisocyanates, such as 1,3,5-triisocyanatomethylbenzene.

Examples of the aromatic polyisocyanates include: aromatic diisocyanates, such as m-phenylene diisocyanate, p-phenylene diisocyanate, 4,4'-diphenyl diisocyanate, 1,5-naphthalene diisocyanate, 2,4-tolylene diisocyanate (commonly known as 2,4-TDI) or 2,6-tolylene diisocyanate (commonly known as 2,6-TDI) or its mixture, 4,4'-toluidine diisocyanate, and 4,4'-diphenyl ether diisocyanate; aromatic triisocyanates, such as triphenylmethane-4,4',4"-triisocyanate, 1,3,5-triisocyanatobenzene, and 2,4,6-triisocyanatotoluene; and aromatic tetraisocyanates, such as 4,4'-diphenylmethane-2,2',5,5'-tetraisocyanate.

Examples of the derivatives include dimers, trimers, biuret, allophanate, uretdione, uretoimine, isocyanurates, oxadiazinetrione, and polymethylene polyphenyl polyisocyanates (crude MDI and polymeric MDI), and crude TDI of the polyisocyanates described above.

The polyisocyanate compound (b11) is preferably an aliphatic diisocyanate, an alicyclic diisocyanate, or a derivative thereof, because the resulting blocked polyisocyanate compound (b1) is less likely to turn yellow when heated. In particular, from the viewpoint of improving the flexibility of the resulting coating film, the polyisocyanate compound (b1) is more preferably an aliphatic diisocyanate or a derivative thereof.

The polyisocyanate compound (b 1 1) also includes a prepolymer produced by reacting an aliphatic polyisocyanate, an alicyclic polyisocyanate, an aromatic-aliphatic polyisocyanate, an aromatic polyisocyanate, a derivative of these polyisocyanates, or any combination of these polyisocyanates with a compound capable of reacting with these polyisocyanates under conditions in which isocyanate groups are excessive. An example of the compound capable of reacting with these polyisocyanates includes a compound having an active hydrogen group such as a hydroxyl group or an amino group, and specific examples include polyhydric alcohols, low molecular weight polyester resins, amines, and water.

The polyisocyanate compound (b 1 1) also includes polymers of an isocyanate group-containing polymerizable unsaturated monomer or copolymers of the isocyanate group-containing polymerizable unsaturated monomer and a polymerizable unsaturated monomer other than the isocyanate group-containing polymerizable unsaturated monomer.

From the viewpoints of the reactivity of the resulting blocked polyisocyanate compound (b 1) and compatibility between the resulting blocked polyisocyanate compound (b 1) and other coating material components, the polyisocyanate compound (b 1 1) has a number-average molecular weight within a range preferably from 300 to 20000, more preferably from 400 to 8000, and even more preferably from 500 to 2000.

From the viewpoints of the reactivity of the resulting blocked polyisocyanate compound (b 1) and compatibility between the resulting blocked polyisocyanate compound (b 1) and other coating material components, the polyisocyanate compound (b 1 1) preferably has an average number of isocyanate functional groups in a range from 2 to 100 per molecule. The average number of isocyanate functional groups is more preferably 3 or greater from the viewpoint of improving the reactivity of the resulting blocked polyisocyanate compound (b 1). The average number of isocyanate functional groups is more preferably 20 or less from the viewpoint of preventing gelation during production of the blocked polyisocyanate compound (b 1).

[Blocking Agent (b 12)]

Examples of the blocking agent (b 12) that blocks the isocyanate groups in the polyisocyanate compound (b 11) include an active methylene-based blocking agent, an alcohol-based blocking agent, a phenol-based blocking agent, an oxime-based blocking agent, an amine-based blocking agent, an acid-amide-based blocking agent, an imidazole-based blocking agent, a pyridine-based blocking agent, and a mercaptan-based blocking agent. These blocking agents can be used alone or in a combination of two or more types.

From the viewpoint of the low-temperature curability, preferably at least a portion of the blocking agent (b12) is an active methylene-based blocking agent, and more preferably the blocking agent (b12) is an active methylene-based blocking agent.

Examples of the active methylene-based blocking agent include: malonic acid diesters, such as dimethyl malonate, diethyl malonate, di-n-propyl malonate, diisopropyl malonate, di-n-butyl malonate, diisobutyl malonate, di-sec-butyl malonate, di-tert-butyl malonate, di-n-pentyl malonate, di-n-hexyl malonate, di(2-ethylhexyl) malonate, methyl isopropyl malonate, ethyl isopropyl malonate, methyl n-butyl malonate, ethyl n-butyl malonate, methyl isobutyl malonate, ethyl isobutyl malonate, methyl sec butyl malonate, ethyl sec-butyl malonate, diphenyl malonate, and dibenzyl malonate, acetoacetic acid esters, such as methyl acetoacetate, ethyl acetoacetate, n-propyl acetoacetate, isopropyl acetoacetate, n-butyl acetoacetate, isobutyl acetoacetate, sec-butyl acetoacetate, tert-butyl acetoacetate, n-pentyl acetoacetate, n-hexyl acetoacetate, 2-ethylhexyl acetoacetate, phenyl acetoacetate, and benzyl acetoacetate, isobutyrylacetic acid esters, such as methyl isobutyrylacetate, ethyl isobutyrylacetate, n-propyl isobutyrylacetate, isopropyl isobutyryl acetate, n-butyl isobutyrylacetate, isobutyl isobutyrylacetate, sec-butyl isobutyrylacetate, tert-butyl isobutyrylacetate, n-pentyl isobutyryl acetate, n-hexyl isobutyryl acetate, 2-ethylhexyl isobutyryl acetate, phenyl isobutyryl acetate, and benzyl isobutyrylacetate, and any combinations of the foregoing.

From the viewpoint of the smoothness and distinctness of image of the coating film formed by the aqueous coating composition according to an embodiment of the present disclosure, the active methylene-based blocking agent is preferably at least one compound selected from the group consisting of dimethyl malonate, diethyl malonate, diisopropyl malonate, methyl acetoacetate, ethyl acetoacetate, methyl isobutyryl acetate, and ethyl isobutyryl acetate.

The blocking reaction of the isocyanate groups in the polyisocyanate compound (b11) can optionally contain a reaction catalyst. Examples of the reaction catalyst include basic compounds such as metal hydroxides, metal alkoxides, metal carboxylates, metal acetylacetonates, onium salt hydroxides, onium carboxylates, active methylene compound metal salts, active methylene compound onium salts, aminosilanes, amines, and phosphines.

From the viewpoint of the low-temperature curability of the aqueous coating composition according to an embodiment of the present disclosure and water resistance of the resulting coating film, the blocked polyisocyanate compound (b1) preferably contains a structure derived from a spacer (b13) having at least 2 isocyanate-reactive functional groups.

[Spacer (b13)]

The spacer (b13) is a compound having at least 2 isocyanate-reactive functional groups.

The isocyanate-reactive functional groups are not particularly limited as long as they are functional groups that are reactive with isocyanate groups. Examples of isocyanate-reactive functional groups include a hydroxyl group, an amino group, a carboxyl group, and a thiol group. In particular, a hydroxyl group or an amino group is preferable, and a hydroxyl group is more preferable.

Therefore, the spacer (b13) is preferably a compound having at least two hydroxyl groups or a compound having at least two amino groups, and more preferably a compound having at least two hydroxyl groups.

Examples of the compound having at least two hydroxyl groups include low-molecular-weight compounds, including dihydric alcohols such as ethylene glycol, diethylene glycol, propylene glycol, butylene glycol, and hexamethylene glycol, and trihydric alcohols such as trimethylolpropane, glycerin, and pentaerythritol; and high-molecular-weight compounds, such as polyether polyols, polyester polyols, acrylic polyols, and epoxy polyols. In particular, from the viewpoint of the water resistance and chipping resistance of the resulting coating film, the compound having at least two hydroxyl groups is preferably a polyether polyol.

The polyether polyol may be a commercially available product. Examples of commercially available products thereof include "PEG #200", "PEG #300", "PEG #400", "PEG #600", "PEG #1000", "PEG #1500", "PEG #1540", "PEG #2000", "PEG #4000", and "PEG #6000" (all polyethylene glycols manufactured by NOF Corp.), "SANNIX GP250", "SANNIX GP400", "SANNIX GP600", "SANNIX GP1000", "SANNIX GP1500", "SANNIX GP3000", and "SANNIX GP4000" (all polyoxypropylene glyceryl ethers manufactured by Sanyo Chemical Industries, Ltd.), "SANNIX PP200", "SANNIX PP400", "SANNIX PP600", "SANNIX PP950", "SANNIX PP1000", "SANNIX PP1200", "SANNIX PP2000", "SANNIX PP3000", and "SANNIX PP4000" (all polyoxypropylene glycols manufactured by Sanyo Chemical Industries, Ltd.), and "PTMG250", "PTMG650", "PTMG1000", "PTMG2000", "PTMG3000", and "PTMG4000" (all polyoxytetramethylene glycols manufactured by Mitsubishi Chemical Corp.).

An example of the compound having at least two amino groups includes a polyetheramine.

The polyetheramine may be a commercially available product. Examples of commercially available products thereof include "JEFFAMINE D-400", "JEFFAMINE D-2000", "JEFFAMINE D-4000", "JEFFAMINE ED-600", "JEFFAMINE ED-900", "JEFFAMINE ED-2003", "ELASTAMINE RT-1000", "JEFFAMINE T-403", "JEFFAMINE T-3000", and "JEFFAMINE T-5000", all manufactured by Huntsman Corporation.

From the viewpoint of the low-temperature curability of the aqueous coating composition according to an embodiment of the present disclosure and the hardness, chipping resistance, and water resistance of the resulting coating film, the spacer (b13) preferably has a molecular weight in a range from 500 to 6000, more preferably in a range from 800 to 5000, and even more preferably in a range from 1000 to 4000.

From the viewpoint of the storage stability of the aqueous coating composition according to an embodiment of the present disclosure, the spacer (b13) preferably has from 2 to 3 functional groups, and more preferably 2 functional groups.

The polyisocyanate compound (b11) containing a structure derived from the spacer (b13) can be formed by reacting some of the isocyanate groups in the polyisocyanate compound (b11) with the spacer (b13). In this case, from the viewpoints of the storage stability of the aqueous coating composition according to an embodiment of the present disclosure, the hardness and water resistance of the resulting coating film, and the manufacturing stability of the blocked polyisocyanate compound (b1), the ratio of the polyisocyanate compound (b11) to the spacer (b13) is preferably such that active hydrogens in the spacer (b13) are in a range from 0.03 to 0.6 mol based on 1 mol of isocyanate groups in the polyisocyanate compound (b11). The blocked polyisocyanate compound (b1) containing a structure derived from the spacer (b13) can be formed by blocking the polyisocyanate compound (b11) containing a structure derived from the spacer (b13).

From the viewpoints of the storage stability of the aqueous coating composition according to an embodiment of the present disclosure, the blocked polyisocyanate compound (b1) may contain a structure derived from a hydrophilic group-containing compound (b14) having one isocyanate-reactive functional group.

[Hydrophilic Group-Containing Compound (b14)]

The hydrophilic group-containing compound (b14) has one isocyanate-reactive functional group. Examples of the hydrophilic group-containing compound (b14) include nonionic hydrophilic group-containing compounds, anionic hydrophilic group-containing compounds, cationic hydrophilic group-containing compounds, and any combinations thereof. The hydrophilic group-containing compound (b14) is preferably a nonionic hydrophilic group-containing compound, because the blocking reaction of the isocyanate groups in the polyisocyanate compound (b11) by the blocking agent (b12) is less likely to be inhibited.

An example of the nonionic hydrophilic group-containing compound includes a compound having a polyoxyalkylene group. Examples of the polyoxyalkylene group include a polyoxyethylene group, a polyoxypropylene group, and a polyoxyethyleneoxypropylene group. From the viewpoint of the storage stability of the aqueous coating composition according to an embodiment of the present disclosure, the nonionic hydrophilic group-containing compound preferably has a polyoxyethylene group.

From the viewpoints of the storage stability of the aqueous coating composition according to an embodiment of the present disclosure and the water resistance of the resulting coating film, the compound having a polyoxyethylene group preferably has 3 or more, preferably from 5 to 100, and more preferably from 8 to 45 continuous polyoxyethylene groups, that is, a polyoxyethylene block.

The compound having a polyoxyethylene group may contain an oxyalkylene group other than an oxyethylene group in addition to the polyoxyethylene block. Examples of the oxyalkylene group other than an oxyethylene group include an oxypropylene group, an oxybutylene group, and an oxystyrene group.

From the viewpoint of the storage stability of the aqueous coating composition according to an embodiment of the present disclosure, the molar ratio of the oxyethylene groups among the oxyalkylene groups in the compound having a polyoxyethylene group is preferably in a range from 20 to 100 mol%, and more preferably in a range from 50 to 100 mol%. When the molar ratio of the oxyethylene groups among the oxyalkylene groups is 20 mol% or greater, hydrophilicity is sufficiently imparted, and the storage stability of the aqueous coating composition according to an embodiment of the present disclosure is improved.

From the viewpoints of the storage stability of the aqueous coating composition according to an embodiment of the present disclosure and the water resistance of the resulting coating film, the nonionic hydrophilic group-containing compound preferably has a number-average molecular weight in a range from 200 to 2000. From the viewpoint of the storage stability of the aqueous coating composition according to an embodiment of the present disclosure, the number-average molecular weight is more preferably 300 or greater, and even more preferably 400 or greater. From the viewpoint of the water resistance of the coating film formed by the aqueous coating composition according to an embodiment of the present disclosure, the number-average molecular weight is more preferably 1500 or less, and even more preferably 1200 or less.

Examples of the nonionic hydrophilic group-containing compound include: polyethyleneglycol monoalkyl ethers (also known as ω-alkoxypolyoxyethylenes) such as polyethyleneglycol monomethyl ether and polyethyleneglycol monoethyl ether; polypropyleneglycol monoalkyl ethers (also known as ω-alkoxypolyoxypropylenes) such as polypropyleneglycol monomethyl ether and polypropyleneglycol monoethyl ether; ω-alkoxypolyoxyethylenes(oxypropylenes) such as ω-methoxypolyoxyethylene(oxypropylene) and ω-ethoxypolyoxyethylene(oxypropylene); polyethylene glycol(propylene glycol) monoalkyl ethers such as polyethylene glycol(propylene glycol) monomethyl ether and polyethylene glycol(propylene glycol) monoethyl ether; and any combinations of the foregoing.

The nonionic hydrophilic group-containing compound is preferably polyethyleneglycol monomethyl ether or polyethyleneglycol monoethyl ether, more preferably polyethyleneglycol monomethyl ether.

In the present specification, "polyethylene glycol(propylene glycol)" means a copolymer of ethylene glycol and propylene glycol, and this term includes block copolymers and random copolymers.

Examples of commercially available products of the polyethylene glycol monomethyl ether include "UNIOX M-400", "UNIOX M-550", "UNIOX M-1000" and "UNIOX M-2000", all manufactured by NOF Corporation.

The polyisocyanate compound (b 1 1) containing a structure derived from the hydrophilic group-containing compound (b14) can be formed by reacting some of the isocyanate groups in the polyisocyanate compound (b 1 1) with the hydrophilic group-containing compound (b 14). In this case, from the viewpoints of the storage stability of the aqueous coating composition according to an embodiment of the present disclosure, as well as the adhesion, smoothness, distinctness of image, water resistance, chipping resistance, and glass adhesiveness of the resulting coating film, the ratio of the polyisocyanate compound (b 1 1) to the hydrophilic group-containing compound (b 14) is preferably such that active hydrogens in the hydrophilic group-containing compound (b14) are in a range from 0.03 to 0.6 mol based on 1 mol of isocyanate groups in the polyisocyanate compound (b 1 1). The blocked polyisocyanate compound (b 1) containing a structure derived from the hydrophilic group-containing compound (b 14) can be formed by blocking the polyisocyanate compound (b 1 1) containing a structure derived from the hydrophilic group-containing compound (b14).

In reacting the isocyanate groups in the polyisocyanate compound (b 1 1) and the blocking agent (b 12) with the spacer (b 13) and/or the hydrophilic group-containing compound (b 14), the order of reaction is not limited.

Specific examples of the reaction method include: a method of reacting some of the isocyanate groups in the polyisocyanate compound (b 1 1) with the spacer (b 13) and/or the hydrophilic group-containing compound (b 14), and then blocking the remaining isocyanate groups with the blocking agent (b12); a method of blocking some of the isocyanate groups in the polyisocyanate compound (b 11) with the blocking agent (b 12), and then reacting the remaining isocyanate groups with the spacer (b 13) and/or the hydrophilic group-containing compound (b 14); and a method of simultaneously reacting isocyanate groups in the polyisocyanate compound (b11) with the blocking agent (b12), the spacer (b13), and/or the hydrophilic group-containing compound (b14).

From the viewpoint of the manufacturing stability and the water resistance and hardness of the resulting coating film, the blocked polyisocyanate compound (b1) preferably has a weight-average molecular weight in a range from 3000 to 200000, more preferably in a range from 10000 to 150000, and more preferably in a range from 30000 to 120000.

[At Least One Anionic Surfactant (b2) Selected From Sulfonic Acid Salts and Sulfuric Ester Salts]

The at least one anionic surfactant (b2) selected from sulfonic acid salts and sulfuric ester salts has a function of improving stability of an emulsified state of the blocked polyisocyanate compound (b1).

Examples of the sulfonic acid salt include alkyl diphenyl ether disulfonic acid salts such as diammonium dodecyl diphenyl ether disulfonate, sodium dodecyl diphenyl ether disulfonate, calcium dodecyl diphenyl ether disulfonate, and sodium alkyl diphenyl ether disulfonate; alkylbenzene sulfonic acid salts such as sodium dodecylbenzenesulfonate and ammonium dodecylbenzenesulfonate; alkyl succinate sulfonic acid salts such as sodium dialkyl sulfosuccinate and disodium monoalkyl succinate sulfonate; and naphthalene sulfonate formalin condensate salts such as sodium naphthalene sulfonate formalin condensates.

Examples of the sulfate ester salt include alkyl sulfuric ester salts such as sodium lauryl sulfate and ammonium lauryl sulfate; and polyoxyalkylene unit-containing sulfuric ester salts (e.g., polyoxyethylene alkyl ether sulfuric ester salts such as sodium polyoxyethylene alkyl ether sulfate and ammonium polyoxyethylene alkyl ether sulfate; polyoxyethylene alkyl phenyl ether sulfuric ester salts such as sodium polyoxyethylene alkyl phenyl ether sulfate and ammonium polyoxyethylene alkyl phenyl ether sulfate; and polyoxyethylene polycyclic phenyl ether sulfuric ester salts such as sodium polyoxyethylene polycyclic phenyl ether sulfate and ammonium polyoxyethylene polycyclic phenyl ether sulfate).

The at least one anionic surfactant (b2) selected from sulfonic acid salts and sulfuric ester salts described above may be used alone, or two or more thereof may be used in combination.

From the viewpoint of obtaining an aqueous coating composition having excellent storage stability, the at least one anionic surfactant (b2) selected from sulfonic acid salts and sulfuric ester salts described above preferably contains a sulfate ester salt, and more preferably contains a polyoxyethylene polycyclic phenyl ether sulfate ester salt.

From the viewpoint of obtaining an aqueous coating composition having excellent storage stability, the content of at least one anionic surfactant (b2) selected from sulfonic acid salts and sulfuric ester salts described above is preferably in a range from 0.1 to 10 parts by mass, more preferably in a range from 0.5 to 7 parts by mass, and even more preferably in a range from 1.0 to 5 parts by mass based on 100 parts by mass of the solid content of the blocked polyisocyanate compound (b1).

The content of the blocked polyisocyanate compound aqueous dispersion (B) is preferably from 2 to 70 mass%, more preferably from 5 to 50 mass%, and even more preferably from 10 to 40 mass%, based on the resin solid content amount in the aqueous coating composition.

[Polycarbodiimide Compound (C)]

The polycarbodiimide compound (C) is a compound having at least two carbodiimide groups per molecule. Examples of the polycarbodiimide compound (C) include a compound produced by subjecting the isocyanate groups of an isocyanate group-containing compound to decarboxylation.

From the viewpoints of excellent storage stability, as well as forming a coating film demonstrating excellent coating film performance such as high hardness and water resistance and demonstrating good glass adhesiveness, the polycarbodiimide compound (C) is preferably a water-soluble or water-dispersible polycarbodiimide compound. The water-soluble or water-dispersible polycarbodiimide compound is not particularly limited as long as it is a water-soluble polycarbodiimide compound that is stably dissolved in an aqueous medium or a water-dispersible polycarbodiimide compound that can be stably dispersed in an aqueous medium.

Specific examples of the water-soluble polycarbodiimide compound include "CARBODILITE SV-02", "CARBODILITE V-02", "CARBODILITE V-02-L2", and "CARBODILITE V-04" (all manufactured by Nisshinbo Chemical, Inc., product names). Examples of the water-dispersible polycarbodiimide compound include "CARBODILITE E-01", "CARBODILITE E-02", and "CARBODILITE E-05" (all manufactured by Nisshinbo Chemical, Inc., product names).

The content of the polycarbodiimide compound (C) is preferably from 1 to 20 mass%, more preferably from 2 to 15 mass%, and even more preferably from 3 to 10 mass%, based on the resin solid content amount in the aqueous coating composition.

The reason why the aqueous coating composition of the present disclosure is excellent in storage stability and can form a coating film exhibiting excellent coating film performance such as high hardness and water resistance and good glass adhesiveness even when cured at a relatively low temperature is not clear, but it is presumed that the emulsification of the blocked polyisocyanate compound aqueous dispersion (B) with at least one anionic surfactant (b) selected from sulfonic acid salts and sulfuric ester salts improves the stability of the blocked polyisocyanate compound (b1) in the emulsified state in water, suppresses the reaction with the hydroxyl group- and carboxyl group-containing resin (A) and the polycarbodiimide compound (C), and provides excellent storage stability of the aqueous coating composition. Further, it is presumed that the aqueous coating composition can form a coating film exhibiting excellent coating film performance such as high hardness and water resistance and good glass adhesiveness even when cured at a relatively low temperature since it contains the polycarbodiimide compound (C) having high reactivity.

[Melamine Resin (D)]

The aqueous coating composition according to an embodiment of the present disclosure may further contain a melamine resin (D).

The melamine resin (D) may be a partially methylolated melamine resin or a fully methylolated melamine resin produced by a reaction of a melamine component with an aldehyde component. Examples of the aldehyde component include formaldehyde, paraformaldehyde, acetaldehyde, and benzaldehyde.

The melamine resin (C) may also be a compound in which methylol groups of the methylolated melamine resin are partially or fully etherified with an appropriate alcohol. Examples of the alcohol used in the etherification include methyl alcohol, ethyl alcohol, n-propyl alcohol, i-propyl alcohol, n-butyl alcohol, i-butyl alcohol, 2-ethyl-1-butanol, and 2-ethyl-1-hexanol.

The melamine resin (D) is preferably a methyl-etherified melamine resin in which methylol groups of a partially or fully methylolated melamine resin are partially or fully etherified with methyl alcohol, a butyl-etherified melamine resin in which methylol groups of a partially or fully methylolated melamine resin are partially or fully etherified with butyl alcohol, or a methyl-butyl mixed etherified melamine resin in which methylol groups of a partially or fully methylolated melamine resin are partially or fully etherified with methyl alcohol and butyl alcohol, and more preferably a methyl-butyl mixed etherified melamine resin.

The melamine resin (D) has a weight-average molecular weight of preferably from 400 to 6000, more preferably from 500 to 4000, and even more preferably from 600 to 3000.

As the melamine resin (D), a commercially available product can be used. Examples of the commercially available products are under the following product names: "CYMEL 202", "CYMEL 203", "CYMEL 204", "CYMEL 211", "CYMEL 212", "CYMEL 238", "CYMEL 251", "CYMEL 253", "CYMEL 254", "CYMEL 303", "CYMEL 323", "CYMEL 324", "CYMEL 325", "CYMEL 327", "CYMEL 350", "CYMEL 370", "CYMEL 380", "CYMEL 385", "CYMEL 1156", "CYMEL 1158", "CYMEL 1116", and "CYMEL 1130" (all manufactured by Allnex Japan Inc.); "RESIMENE 735", "RESIMENE 740", "RESIMENE 741", "RESIMENE 745", "RESIMENE 746", and "RESIMENE 747" (all manufactured by Monsanto Company); "U-VAN 120", "U-VAN 20HS", "U-VAN 20SE", "U-VAN 2021", "U-VAN 2028", and "U-VAN 28-60" (all manufactured by Mitsui Chemicals, Inc.); and "SUMIMAL M55", "SUMIMAL M30W", and "SUMIMAL M50W" (all manufactured by Sumitomo Chemical Co., Ltd.).

When the aqueous coating composition according to an embodiment of the present disclosure contains the melamine resin (D), the content of the melamine resin (D) is preferably from 1 to 30 mass%, more preferably from 2 to 20 mass%, and even more preferably from 3 to 15 mass%, based on the resin solid content amount in the aqueous coating composition.

[Additional Component]

The aqueous coating composition according to an embodiment of the present disclosure may further contain, for example, a resin other than the resins described above, a pigment, an organic solvent, a curing catalyst, a dispersant, an antisettling agent, a defoaming agent, a thickener, an ultraviolet absorber, a photostabilizer, or a surface conditioner as necessary.

Examples of the resin other than the resins described above include hydroxyl group- and/or carboxyl group-free acrylic resins, hydroxyl group- and/or carboxyl group-free polyester resins, hydroxyl group- and/or carboxyl group-free polyurethane resins, hydroxyl group- and/or carboxyl group-free polyether resins, hydroxyl group- and/or carboxyl group-free polycarbonate resins, and hydroxyl group- and/or carboxyl group-free epoxy resins. In particular, the resin other than the resins described above is preferably a hydroxyl group-free carboxyl group-containing polyurethane resin.

The hydroxyl group-free carboxyl group-containing polyurethane resin can be prepared by a known method, for example, by reacting a polyol with a polyisocyanate. After the reaction, chain extension may be carried out in the presence of a chain extender that is a low molecular weight compound having at least two active hydrogen atoms per molecule, such as a diol or a diamine. Furthermore, during or after the preparation the resin, modification may be performed with an acrylic resin or the like.

The polyol, polyisocyanate, and chain extender may be the compounds included in the description of the hydroxyl group- and carboxyl group-containing polyurethane resin (A3).

Examples of the pigment include color pigments, extender pigments, and effect pigments. The pigments may be used alone or in combination of two or more types.

When the aqueous coating composition according to an embodiment of the present disclosure contains the pigment, the compounding amount of the pigment is suitably in a range from 1 to 200 parts by mass, preferably in a range from 5 to 160 parts by mass, and more preferably in a range from 15 to 140 parts by mass, based on 100 parts by mass of the resin solid content in the aqueous coating composition according to an embodiment of the present disclosure.

Examples of the color pigments include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, and diketopyrrolopyrrole-based pigments.

When the aqueous coating composition according to an embodiment of the present disclosure contains the color pigment, the compounding amount of the color pigment is suitably in a range from 1 to 180 parts by mass, preferably in a range from 5 to 150 parts by mass, and more preferably in a range from 15 to 130 parts by mass, based on 100 parts by mass of the resin solid content in the aqueous coating composition according to an embodiment of the present disclosure.

Examples of the extender pigment include barium sulfate, talc, clay, kaolin, barium carbonate, calcium carbonate, silica, and alumina white. The extender pigment is preferably barium sulfate from the viewpoint of improving designability and the like.

When the aqueous coating composition according to an embodiment of the present disclosure contains the extender pigment, the compounding amount of the extender pigment is suitably in a range from 1 to 180 parts by mass, preferably in a range from 5 to 140 parts by mass, and more preferably in a range from 10 to 120 parts by mass, based on 100 parts by mass of the resin solid content in the aqueous coating composition according to an embodiment of the present disclosure.

Examples of the effect pigment include aluminum (including vapor-deposited aluminum), copper, zinc, brass, nickel, glass flakes, aluminum oxide, mica, aluminum oxide coated with titanium oxide and/or iron oxide, and mica coated with titanium oxide and/or iron oxide. Among them, an aluminum pigment is preferably used. The aluminum pigment is classified into a non-leafing type aluminum pigment and a leafing type aluminum pigment, and any of them can be used.

The effect pigment is preferably a scale-shaped pigment. The effect pigment preferably has a longitudinal dimension in a range from 1 to 100 $\mu$m, particularly from 5 to 40 $\mu$m, and a thickness in a range from 0.001 to 5 $\mu$m, particularly from 0.01 to 2 $\mu$m.

When the aqueous coating composition according to an embodiment of the present disclosure contains the effect pigment, the compounding amount of the effect pigment is suitably in a range from 0.1 to 100 parts by mass, preferably in a range from 1 to 50 parts by mass, and more preferably in a range from 3 to 25 parts by mass, based on 100 parts by mass of the resin solid content in the aqueous coating composition according to an embodiment of the present disclosure.

Examples of the organic solvent include: ketone-based solvents, such as acetone, methyl ethyl ketone, and methyl isobutyl ketone; ester-based solvents, such as ethyl acetate, butyl acetate, methyl benzoate, ethyl ethoxypropionate, ethyl propionate, and methyl propionate; alcohol-based solvents, such as isopropanol, n-butanol, iso-butanol, and 2-ethylhexanol; ether-based solvents, such as tetrahydrofuran, dioxane, and dimethoxyethane; glycol ether-based solvents, such as ethylene glycol monomethyl ether, ethylene glycol monoethyl ether, diethylene glycol monomethyl ether, propylene glycol monomethyl ether acetate, and 3-methoxybutyl acetate; aromatic hydrocarbon-based solvents; and aliphatic hydrocarbon-based solvents.

Specific examples of the curing catalyst include: organometallic compounds such as tin octylate, dibutyltin diacetate, dibutyltin di(2-ethylhexanoate), dibutyltin dilaurate, dioctyltin diacetate, dioctyltin di(2-ethylhexanoate), dibutyltin oxide, dibutyltin sulfide, dioctyltin oxide, dibutyltin fatty acid salts, lead 2-ethylhexanoate, zinc octylate, zinc naphthenate, zinc fatty acids, bismuth octanoate, bismuth 2-ethylhexanoate, bismuth oleate, bismuth neodecanoate, bismuth versatate, bismuth naphthenate, cobalt naphthenate, calcium octylate, copper naphthenate, and tetra(2-ethylhexyl) titanate; sulfonic acid group-containing compounds such as paratoluenesulfonic acid, dodecylbenzenesulfonic acid, and dinonylnaphthalenesulfonic acid; and phosphate group-containing compounds such as monobutyl phosphoric acid, dibutyl phosphoric acid, mono-2-ethylhexyl phosphoric acid, di-2-ethylhexyl phosphoric acid, alkyl ether phosphoric acid, polyoxyethylene alkyl ether phosphoric acid, and phosphate group-containing resins. In particular, from the viewpoints of the storage stability of the aqueous coating composition and the water resistance and chipping resistance of the resulting coating film, the curing catalyst is preferably a phosphate group-containing compound, more preferably a phosphate group-containing resin, and even more preferably a phosphate group-containing acrylic resin.

The phosphate group-containing acrylic resin can be synthesized by using a known method to copolymerize a polymerizable unsaturated monomer having a phosphate group with another polymerizable unsaturated monomer.

In the phosphate group-containing acrylic resin, the content of the polymerizable unsaturated monomer having a phosphate group is preferably from 1 to 50 mass%, particularly preferably from 5 to 40 mass%, based on the total amount of the monomer components constituting the phosphate group-containing acrylic resin.

From the viewpoints of the finished appearance and coating film performance, the phosphate group-containing acrylic resin preferably has a weight-average molecular weight preferably in a range from 3000 to 30000, more preferably in a range from 5000 to 25000, and even more preferably in a range from 10000 to 20000.

When the curing catalyst is a phosphate group-containing compound, the content of the phosphate group-containing compound is preferably from 0.1 to 20 mass%, more preferably from 0.5 to 15 mass%, and even more preferably from 1 to 10 mass%, based on the resin solid content amount in the aqueous coating composition.

When the aqueous coating composition according to an embodiment of the present disclosure is used in coating, water and/or an organic solvent or the like can be added to the aqueous coating composition as necessary to dilute the aqueous coating composition and adjust the viscosity to an appropriate level.

The appropriate level of viscosity varies depending on the composition of the coating material. For example, when the viscosity is adjusted using a Ford cup No. 4 viscometer, the viscosity can be usually approximately from 20 to 100 seconds, preferably approximately from 25 to 70 seconds, at 20°C.

In the above description, a coating solid content concentration of the aqueous coating composition is usually about from 5 to 70 mass%, and preferably about from 10 to 55 mass%.

The aqueous coating composition according to an embodiment of the present disclosure may be either a one-component coating material or a multi-component coating material, but is preferably a one-component coating material from the perspective of excellent productivity without a mixing process of coating materials, simplification of maintenance of a coating machine, and the like.

The aqueous coating composition according to an embodiment of the present disclosure can be applied onto an object to be coated by a method known per se, such as air spraying, airless spraying, rotary atomization coating, or curtain coating. Electrostatic application may also be performed during the application. In particular, air spraying and rotary atomization coating are preferable. Such a coating method can be carried out once or several times until a desired film thickness is achieved.

The amount of application of the aqueous coating composition according to an embodiment of the present disclosure is an amount so as to achieve a cured film thickness of usually from 5 to 40 $\mu$m, preferably from 7 to 35 $\mu$m, and more preferably from 10 to 30 $\mu$m.

[Multilayer Coating Film-Forming Method]

The aqueous coating composition according to an embodiment of the present disclosure forms a coating film demonstrating good glass adhesiveness and excellent coating film performance such as high hardness and water resistance even when cured at a relatively low temperature. As such, the aqueous coating composition according to an embodiment of the present disclosure can be suitably used as an intermediate coating composition. The present coating material can be particularly suitably used as a coating material for automobiles.

A preferred example of a method of forming a multilayer coating film in which the present coating material serves as an intermediate coating composition is the following method.

A method of forming a multilayer coating film including, in sequence:

(1) applying the aqueous coating composition according to an embodiment of the present disclosure onto an object to be coated to form an intermediate coating film;
(2) applying an aqueous basecoat coating composition onto the intermediate coating film formed in (1) to form a basecoat coating film;
(3) applying a clear coating composition onto the basecoat coating film formed in (2) to form a clear coating film; and
(4) heating and curing all at once the intermediate coating film, the base coating film, and the clear coating film formed in (1) to (3).

Examples of the object to be coated include: outer panel parts of automobile bodies, such as those of passenger cars, trucks, motorcycles, and buses; automobile parts; outer panel parts of home electrical appliances, such as mobile phones and audio devices. Outer panel parts of automobile bodies and automobile parts are preferred as the object to be coated.

The material of the object to be coated is not particularly limited. Examples of the material include metal materials, such as iron, aluminum, brass, copper, tinplate, stainless steel, galvanized steel, and zinc alloy (such as Zn-Al, Zn-Ni, or Zn-Fe)-plated steel; resins, such as polyethylene resins, polypropylene resins, acrylonitrile-butadiene-styrene (ABS) resins, polyamide resins, acrylic resins, vinylidene chloride resins, polycarbonate resins, polyurethane resins, and epoxy resins; plastic materials, such as various FRP; inorganic materials, such as glass, cement, and concrete; woods; and fiber materials, such as paper and cloth. As the object to be coated, a metal material and a plastic material are preferred.

A surface of the object to be coated to which the coating film is applied may be a metal surface of, for example, an outer panel part of an automobile body, an automobile part, a home electrical appliance, or a metal substrate such as a steel sheet constituting the foregoing, that has undergone surface treatment, such as phosphate salt treatment, chromate treatment, or composite oxide treatment.

A coating film may be further formed on an object that may or may not be surface-treated. For example, an object to be coated, which is a substrate, may be surface-treated as necessary, and an undercoating film may be formed on the treated surface. For example, in a case in which the object to be coated is an automobile body, the undercoating film can be formed using a coating material for undercoating that is known per se and that is typically used in automobile body coating.

For example, an electrodeposition coating material, preferably a cationic electrodeposition coating material, can be used as the undercoating composition to form the undercoating film.

As the aqueous basecoat coating composition, it is possible to use a coating material prepared using: a base resin having a cross-linking functional group such as a carboxyl group or a hydroxyl group, such as an acrylic resin, a polyester resin, an alkyd resin, a urethane resin, or an epoxy resin; and a cross linking agent, such as an amino resin such as a melamine resin or a urea resin, or a polyisocyanate compound that may be blocked; together with a pigment, a thickener, and an optional additional component.

The method of applying the aqueous basecoat coating composition is not particularly limited, and it is possible to form a wet coating film by a coating method, for example, air spraying, airless spraying, rotary atomization coating, or curtain coating. In such an application method, an electrostatic voltage may be applied as necessary. Among these methods, air spraying or rotary atomization coating is particularly preferred. The amount of application of the aqueous basecoat coating composition is determined so as to achieve a cured film thickness of usually from 3 to 50 $\mu$m, preferably from 5 to 30 $\mu$m.

In a case in which air spraying, airless spraying, and rotary atomization coating are carried out, a solvent such as water and/or an organic solvent is preferably used to appropriately adjust the viscosity of the aqueous basecoat coating composition to a viscosity range suitable for the application, which is usually a viscosity approximately from 20 to 100 seconds, preferably approximately from 25 to 70 seconds at 20°C when adjusted with a Ford cup viscometer No. 4.

The clear coating composition may be any thermosetting clear coating composition that is known to be used in automobile body coating. Examples of the thermosetting clear coating composition include: organic solvent-type thermosetting coating compositions containing a base resin having a cross-linking functional group and a curing agent; aqueous thermosetting coating compositions; and powder thermosetting coating compositions.

Examples of the crosslinkable functional group contained in the base resin include a carboxyl group, a hydroxyl group, an epoxy group, and a silanol group. Examples of the type of the base resin include acrylic resins, polyester resins, alkyd resins, urethane resins, epoxy resins, and fluororesins. Examples of the curing agent include polyisocyanate compounds, blocked polyisocyanate compounds, melamine resins, urea resins, carboxyl group-containing compounds, carboxyl group-containing resins, epoxy group-containing resins, and epoxy group-containing compounds.

The combination of the base resin/the curing agent in the clear coating composition is preferably a hydroxyl group-containing resin/a polyisocyanate compound, a carboxyl group-containing resin/an epoxy group-containing resin, a hydroxyl group-containing resin/a blocked polyisocyanate compound, or a hydroxyl group-containing resin/a melamine resin, and more preferably a hydroxyl group-containing resin/a polyisocyanate compound.

In addition, the clear coating composition may be a one-component coating material or a multi-component coating material, such as a two-component urethane resin coating material.

The clear coating composition may contain, as necessary, a color pigment, an effect pigment, a dye, or the like to such an extent that it does not impair transparency. Furthermore, the clear coating composition may further contain, as appropriate, an extender pigment, an ultraviolet absorber, a light stabilizer, an antifoaming agent, a thickener, a rust inhibitor, a surface conditioner, or the like.

The method of applying the clear coating composition is not particularly limited, and a wet coating film may be formed by an application method such as air spraying, airless spraying, rotary atomization coating, or curtain coating. In such an application method, an electrostatic voltage may be applied as necessary. Among these methods, air spraying or rotary atomization coating is particularly preferred. The amount of application of the clear coating composition is determined so as to achieve a cured film thickness of usually from 10 to 70 $\mu$m, preferably from 20 to 50 $\mu$m.

In a case in which air spraying, airless spraying, and rotary atomization coating are carried out, a solvent such as an organic solvent is preferably used to appropriately adjust the viscosity of the clear coating composition to a viscosity range suitable for the application, which is usually a viscosity range approximately from 15 to 60 seconds, particularly approximately from 20 to 50 seconds at 20°C as measured with a Ford cup No. 4 viscometer.

The heating in (4) can be performed by a known means, and for example, a drying furnace, such as a hot air furnace, an electric furnace, or an infrared induction heating furnace, can be applied. The heating temperature is in a range from 50 to 140°C, preferably in a range from 60 to 120°C, and more preferably in a range from 70 to 90°C. The heating time is not particularly limited, and is preferably in a range from 10 to 40 minutes, more preferably from 20 to 40 minutes.

Examples

The present disclosure will next be described in more detail with reference to Production Examples, Examples, and Comparative Examples. These Production Examples, Examples, and Comparative Examples are merely exemplary and are not intended to limit the scope of the present disclosure. In Production Examples, Examples, and Comparative Examples, "parts" and "%" are in mass basis unless otherwise specified. The thickness of a coating film is based on that of a cured coating film.

[Production of Hydroxyl Group- and Carboxyl Group-Containing Resin (A)]

[Production of Hydroxyl Group- and Carboxyl Group-Containing Acrylic Resin Particles (A1') Having a Core-Shell Structure]

[Production Example 1]

A reaction vessel equipped with a thermometer, a thermostat, a stirrer, a reflux condenser, a nitrogen introduction tube, and a dripping device was charged with 130 parts of deionized water and 0.52 parts of "AQUALON KH-10" (product name, manufactured by DKS Co. Ltd., an emulsifier containing 97% active ingredient). While the contents in the reaction vessel were mixed under stirring in a nitrogen stream, the contents were heated to 80°C.

Then, 1.72 parts of monomer emulsion (1) which will be described below and 5.3 parts of a 6% ammonium persulfate aqueous solution were introduced into the reaction vessel, and the contents in the reaction vessel were maintained at 80°C for 15 minutes. The remaining monomer emulsion (1) was added dropwise over 3 hours into the reaction vessel maintained at the temperature specified above. After completion of the dropwise addition, the mixture was aged for 1 hour. Thereafter, the following monomer emulsion (2) was added dropwise to the reaction vessel over 1 hour and aged for 1 hour, and then the contents in the reaction vessel were cooled to 30°C while 20 parts of 5% triethylamine aqueous solution was gradually added to the reaction vessel. The contents in the reaction vessel were discharged while being filtered with a 100-mesh nylon cloth, resulting in hydroxyl group- and carboxyl group-containing acrylic resin particles (A1'-1) having the solid content concentration of 30%. The resulting hydroxyl group- and carboxyl group-containing acrylic resin particles (A1'-1) had an acid value of 16 mg KOH/g, a hydroxyl value of 66 mg KOH/g, and a glass transition temperature of 21°C.

Monomer emulsion (1): produced by mixing and stirring 42 parts of deionized water, 0.72 parts of "AQUALON KH-10", 2 parts of methylenebisacrylamide, 5 parts of styrene, 15 parts of methyl methacrylate, 5 parts of 2-hydroxyethyl methacrylate, and 23 parts of n-butyl acrylate.

Monomer emulsion (2): produced by mixing and stirring 42 parts of deionized water, 0.72 parts of "AQUALON KH-10", 0.05 parts of ammonium persulfate, 2.5 parts of methacrylic acid, 10 parts of 2-hydroxyethyl methacrylate, 5 parts of styrene, 12.5 parts of methyl methacrylate, 10 parts of n-butyl acrylate, and 10 parts of n-butyl methacrylate.

[Production of Hydroxyl Group- and Carboxyl Group-Containing Acrylic Resin Particles (A1") Having a Core-Shell Structure and Containing a Gradient Polymer Layer]

[Production Example 2]

A reaction vessel equipped with a thermometer, a thermostat, a stirrer, a reflux condenser, a nitrogen introduction tube, and a dripping device was charged with 130 parts of deionized water and 0.52 parts of "AQUALON KH-10" (product name, manufactured by DKS Co. Ltd., an emulsifier containing 97% active ingredient). While the contents in the reaction vessel were mixed under stirring in a nitrogen stream, the contents were heated to 80°C.

Then, 1.72 parts of monomer emulsion (1) which will be described below and 5.3 parts of a 6% ammonium persulfate aqueous solution were introduced into the reaction vessel, and the contents in the reaction vessel were maintained at 80°C for 15 minutes. Thereafter, 35.4 parts of the monomer emulsion (1) was added dropwise over 1 hour into the reaction vessel maintained at the temperature specified above. Immediately after the completion of the dropwise addition, 55.6 parts of the remaining monomer emulsion (1) was added dropwise to the reaction vessel. At the same time, 55.6 parts of the monomer emulsion (2) was added dropwise to the monomer emulsion (1), and the dropwise addition of the monomer emulsion (1) and the monomer emulsion (2) was completed over 2 hours. Thereafter, 37.17 parts of the remaining monomer emulsion (2) was added dropwise to the reaction vessel over 1 hour and aged for 1 hour, and then the contents in the reaction vessel were cooled to 30°C while 20 parts of 5% triethylamine aqueous solution was gradually added to the reaction vessel. Then, the contents in the reaction vessel were discharged while being filtered with a 100-mesh nylon cloth, resulting in hydroxyl group- and carboxyl group-containing acrylic resin particles (A1"-1) having the solid content concentration of 30%. The resulting hydroxyl group- and carboxyl group-containing acrylic resin particles (A1"-1) had an acid value of 16 mg KOH/g, a hydroxyl value of 66 mg KOH/g, and a glass transition temperature of 21°C.

Monomer emulsion (1): produced by mixing and stirring 42 parts of deionized water, 0.72 parts of "AQUALON KH-10", 2 parts of methylenebisacrylamide, 5 parts of styrene, 15 parts of methyl methacrylate, 5 parts of 2-hydroxyethyl methacrylate, and 23 parts of n-butyl acrylate.

Monomer emulsion (2): produced by mixing and stirring 42 parts of deionized water, 0.72 parts of "AQUALON KH-10", 0.05 parts of ammonium persulfate, 2.5 parts of methacrylic acid, 10 parts of 2-hydroxyethyl methacrylate, 5 parts of styrene, 12.5 parts of methyl methacrylate, 10 parts of n-butyl acrylate, and 10 parts of n-butyl methacrylate.

[Production of Hydroxyl Group- and Carboxyl Group-Containing Polyester Resin (A2)]

[Production Example 3]

A reaction vessel equipped with a thermometer, a thermostat, a stirrer, a reflux condenser, and a water separator was charged with 174 parts of trimethylolpropane, 327 parts of neopentyl glycol, 352 parts of adipic acid, 109 parts of isophthalic acid, and 101 parts of 1,2-cyclohexane dicarboxylic anhydride, and the contents in the reaction vessel were heated from 160°C to 230°C over 3 hours. Then, while the resulting condensed water was distilled off using the water separator, the contents were maintained at 230°C, and were reacted until the acid value reached 3 mg KOH/g or less. To the reaction product, 59 parts of trimellitic anhydride was added, and addition reaction was performed at 170°C for 30 minutes. Then, the contents in the reaction vessel were cooled to 50°C or lower, and 75.8 parts of triethylamine was added to neutralize the contents in the reaction vessel. Then, deionized water was gradually added after neutralization of the contents in the reaction vessel, resulting in a hydroxyl group- and carboxyl group-containing polyester resin (A2-1) solution having the solid content concentration of 45%. The resulting hydroxyl group- and carboxyl group-containing polyester resin (A2-1) had a hydroxyl value of 128 mg KOH/g, an acid value of 35 mg KOH/g, and a weight-average molecular weight of 13000.

[Production of Hydroxyl Group- and Carboxyl Group-Containing Polyurethane Resin (A3)]

[Production Example 4]

A reactor equipped with a thermometer, a stirrer, and a reflux condenser was charged with 211.9 parts of polytetramethylene glycol (having a number-average molecular weight of 1000), 11.5 parts of 2,2-dimethylolpropionic acid, 6.9 parts of trimethylolpropane, 112.2 parts of isophorone diisocyanate, and 298.5 parts of methyl ethyl ketone, and the reaction system was purged with nitrogen gas. Then, the contents in the reactor were reacted at 80°C with being stirred, resulting in an NCO-terminated urethane prepolymer having a free isocyanate group content of 3.2%. In a reactor, the resulting NCO-terminated urethane prepolymer was cooled to 40°C, and 493.2 g of deionized water containing 8.6 parts of triethylamine was added to the reactor to emulsify the contents in the reactor. Then, 275.9 parts of a 5% N-(2-hydroxyethyl) ethylenediamine aqueous solution was added to the reactor, and the contents in the reactor were stirred for 60 minutes. Thereafter, methyl ethyl ketone in the reactor was distilled off while being heated under reduced pressure, and the concentration of the contents in the reactor was adjusted with deionized water, resulting in a dispersion liquid of a hydroxyl group- and carboxyl group-containing polyurethane resin (A3-1) having a solid content of 35%, an acid value of 14 mg KOH/g, a hydroxyl value of 12 mg KOH/g, and an average particle size of 120 nm.

The average particle size is a value measured at 20°C using a particle size distribution measurement device "ELSZ-2000" (product name, manufactured by Otsuka Electronics Co., Ltd.) based on a dynamic light scattering method after dilution with deionized water by a known method. The same applies hereinafter.

[Production of Hydroxyl Group-Free Carboxyl Group-Containing Polyurethane Resin (U)]

[Production Example 5]

A reactor equipped with a thermometer, a stirrer, and a reflux condenser was charged with 211.9 parts of polytetramethylene glycol (having a number-average molecular weight of 1000), 11.5 parts of 2,2-dimethylolpropionic acid, 6.9 parts of trimethylolpropane, 112.2 parts of isophorone diisocyanate, and 298.5 parts of methyl ethyl ketone, and the reaction system was purged with nitrogen gas. Then, the contents in the reactor were reacted at 80°C with being stirred, resulting in an NCO-terminated urethane prepolymer having a free isocyanate group content of 3.2%. In a reactor, the resulting NCO-terminated urethane prepolymer was cooled to 40°C, and 493.2 g of deionized water containing 9.8 parts of triethylamine was added to the reactor to emulsify the contents in the reactor. Then, 159.2 parts of a 5% ethylenediamine aqueous solution was added to the reactor, and the contents in the reactor were stirred for 60 minutes. Thereafter, methyl ethyl ketone in the reactor was distilled off while being heated under reduced pressure, and the concentration of the contents in the reactor was adjusted with deionized water, resulting in a dispersion liquid of a hydroxyl group-free carboxyl group-containing polyurethane resin (U-1) having a solid content of 35%, an acid value of 14 mg KOH/g, and an average particle size of 120 nm.

[Production Example 6]

A reactor equipped with a thermometer, a stirrer, and a reflux condenser was charged with 256.7 parts of polytetramethylene glycol (having a number-average molecular weight of 1000), 27.9 parts of 2,2-dimethylolpropionic acid, 6.4 parts of trimethylolpropane, 151.3 parts of isophorone diisocyanate, and 215.5 parts of methyl ethyl ketone, and the reaction system was purged with nitrogen gas. Then, the contents in the reactor were reacted at 80°C with being stirred, resulting in an NCO-terminated urethane prepolymer having a free isocyanate group content of 2.1%. In a reactor, the resulting NCO-terminated urethane prepolymer was cooled to 40°C, and 671.5 g of deionized water containing 18.9 parts of triethylamine was added to the reactor to emulsify the contents in the reactor. Then, 144.2 parts of a 5% ethylenediamine aqueous solution was added to the reactor, and the contents in the reactor were stirred for 60 minutes. Thereafter, methyl ethyl ketone in the reactor was distilled off while being heated under reduced pressure, and the concentration of the contents in the reactor was adjusted with deionized water, resulting in a dispersion liquid of a hydroxyl group-free carboxyl group-containing polyurethane resin (U-2) having a solid content of 35%, an acid value of 25 mg KOH/g, and an average particle size of 20 nm.

[Production of Blocked Polyisocyanate Compound (b1)]

[Production Example 7]

A reaction vessel equipped with a thermometer, a thermostat, a stirrer, a reflux condenser, a nitrogen introduction tube, a dropping device, and a simple trap for the removed solvent was charged with 1500 parts of "Sumidur N-3300" (product name, manufactured by Sumika Bayer Urethane Co., Ltd., a polyisocyanate containing isocyanurate structure derived from hexamethylene diisocyanate, solid content: 100%, isocyanate group content: 21.8%) and 0.9 parts of 2,6-di-t-butyl-4-methylphenol. The contents in the reaction vessel were mixed well and heated at 130°C for 3 hours under a nitrogen stream. Next, 1200 parts of ethyl acetate and 1300 parts of diisopropyl malonate were charged into the reaction vessel, and 14 parts of a 28% methanol solution of sodium methoxide were added while the contents in the reaction vessel were stirred under a nitrogen stream. The contents in the reaction vessel were stirred at 65°C for 8 hours, resulting in a blocked polyisocyanate compound (b1-1) having a solid content of 70% and a weight-average molecular weight of 4000.

[Production Example 8]

A reaction vessel equipped with a thermometer, a thermostat, a stirrer, a reflux condenser, a nitrogen introduction tube, and a dropping device was charged with 1610 parts of "Sumidur N-3300" (product name, manufactured by Sumika Bayer Urethane Co., Ltd., a polyisocyanate containing isocyanurate structure derived from hexamethylene diisocyanate, solid content: 100%, isocyanate group content: 21.8%), 1200 parts of "PTMG2000" (product name, manufactured by Mitsubishi Chemical Corporation, a polytetramethylene ether glycol, average molecular weight: 2000, solid content: 100%), and 0.9 parts of 2,6-di-t-butyl-4-methylphenol. The contents in the reaction vessel were mixed well and heated at 130°C for 3 hours under a nitrogen stream. Next, 1200 parts of ethyl acetate and 1250 parts of diisopropyl malonate were charged into the reaction vessel, and 14 parts of a 28% methanol solution of sodium methoxide were added while the contents in the reaction vessel were stirred under a nitrogen stream. The contents in the reaction vessel were stirred at 65°C for 8 hours and diluted with ethyl acetate to a final solid content of 70%, resulting in a blocked polyisocyanate compound (b1-2) having a solid content of 70% and a weight-average molecular weight of 50000.

[Production of Blocked Polyisocyanate Compound Aqueous Dispersion (B)]

[Production Example 9]

A reaction vessel was charged with 142.9 parts of the blocked polyisocyanate compound (b1-1) produced in Production Example 7 (solid content: 100 parts) and 15 parts of dipropylene glycol monomethyl ether, and the contents in the reaction vessel were stirred at room temperature of 25°C for 0.5 hours. Then, 6.7 parts of "Newcol 707-SF" (product name, manufactured by Nippon Nyukazai Co., Ltd., polyoxyethylene polycyclic phenyl ether sulfate ester salt, solid content: 30%) (solid content: 2 parts) was then charged into the reaction vessel, and the contents in the reaction vessel were stirred at room temperature of 25°C for 0.5 hours. Subsequently, the concentration of the contents was adjusted with deionized water, resulting in an aqueous dispersion (B-1) of a blocked polyisocyanate compound having a solid content of 35%.

[Production Examples 10 to 14]

Each of aqueous dispersions (B-2) to (B-6) of blocked polyisocyanate compounds having a solid content of 35% was produced in the same manner as in Production Example 9 except that the formulation composition was as shown in Table 1 below. The formulation composition shown in Table 1 is based on the solid content mass of each component.

[Table 1]

Table 1

| Production Examples | | 9 | 10 | 11 | 12 | 13 | 14 |
|---|---|---|---|---|---|---|---|
| Blocked polyisocyanate compound aqueous dispersion (B) No. | | B-1 | B-2 | B-3 | B-4 | B-5 | B-6 |
| Blocked polyisocyanate compound (b1) | No. | b1-1 | b 1-2 | b 1-2 | b 1-2 | b 1-2 | b 1-2 |
| | Compounding amount | 100 | 100 | 100 | 100 | 100 | 100 |
| At least one anionic surfactant (b2) selected from sulfonic acid salts and sulfuric ester salts | Newcol 707-SF | 2 | 0.3 | 2 | 10 | | |
| | Sodium dodecylbenzenesulfonate | | | | | 2 | |
| Other surfactants | Sodium lauryl phosphate | | | | | | 2 |

[Production of Phosphate Group-Containing Acrylic Resin]

[Production Example 15]

A reaction vessel equipped with a thermometer, a thermostat, a stirrer, a reflux condenser, and a dropping device was charged with a mixed solvent of 27.5 parts of methoxypropanol and 27.5 parts of isobutanol, and the contents in the reaction vessel were heated to 110°C. Then, 121.5 parts of a mixture composed of 25 parts of styrene, 27.5 parts of n-butyl methacrylate, 20 parts of "isostearyl acrylate" (product name, manufactured by Osaka Organic Chemical Industry Ltd., a branched higher alkyl acrylate), 7.5 parts of 4-hydroxybutyl acrylate, 15 parts of a phosphate group-containing polymerizable monomer described below, 12.5 parts of 2-methacryloyloxyethyl acid phosphate, 10 parts of isobutanol, and 4 parts of t-butyl peroxyoctanoate was added to the reaction vessel over 4 hours, and a mixture composed of 0.5 parts of t-butyl peroxyoctanoate and 20 parts of isopropanol was further added dropwise to the reaction vessel over one hour. The contents in the reaction vessel were then aged under stirring for one hour, and a phosphate group-containing acrylic resin solution with a solid content concentration of 50% was produced. The acid value due to the phosphate group of the resin was 83 mg KOH/g, the hydroxyl value was 29 mg KOH/g, and the weight-average molecular weight was 10000.

Phosphate group-containing polymerizable monomer: a reaction vessel equipped with a thermometer, a thermostat, a stirrer, a reflux condenser, and a dropping device were charged with 57.5 parts of monobutyl phosphate and 41 parts of isobutanol, and the contents in the reaction vessel were heated to 90°C, after which 42.5 parts of glycidyl methacrylate were added dropwise for over 2 hours, and then the contents in the reaction vessel were further stirred and aged for 1 hour. Subsequently, 59 parts of isopropanol were added to the reaction vessel, and a phosphate group-containing polymerizable monomer solution having a solid content concentration of 50% was produced. The acid value due to the phosphate group of the resulting monomer was 285 mg KOH/g.

[Production of Pigment Dispersion Liquid]

[Production Example 16]

Mixed were 44.4 parts of the hydroxyl group- and carboxyl group-containing polyester resin (A2-1) solution produced in Production Example 3 (solid content: 20 parts), 100 parts of "JR-806" (product name, manufactured by Tayca Corporation, a rutile-type titanium dioxide), 1 part of "Carbon MA-100" (product name, manufactured by Mitsubishi Chemical Corporation, a carbon black), and 10 parts of deionized water to form a mixed solution. Then, triethylamine was added to the mixed solution to adjust the pH of the mixed solution to 8.0. The resulting mixed solution was then placed in a wide-mouth glass bottle. Glass beads with a diameter of approximately 1.3 mmcp were added as dispersion media, and the wide-mouth glass bottle was sealed. The content was dispersed with a paint shaker for 30 minutes, resulting in a pigment dispersion liquid (P-1).

[Production of Aqueous Coating composition]

[Example 1]

Evenly mixed were 155.4 parts of the pigment dispersion liquid (P-1) produced in Production Example 16, 83.3 parts of the hydroxyl group- and carboxyl group-containing acrylic resin particles (A1'-1) produced in Production Example 1 (solid content: 25 parts), 57.1 parts of the hydroxyl group- and carboxyl group-containing polyurethane resin dispersion liquid (A3-1) produced in Production Example 4 (solid content: 20 parts), 71.4 parts of the aqueous dispersion (B-1) of the blocked polyisocyanate compound produced in Production Example 9 (solid content: 25 parts), 12.5 parts of "Carbodilite SV02" (product name, manufactured by Nisshinbo Chemical, Inc., a carbodiimide compound, solid content: 40%, carbodiimide equivalent per solid content: 429) (solid content: 5 parts), 6.3 parts of "CYMEL 325" (product name, melamine resin, manufactured by Allnex Japan Inc., solid content: 80%) (solid content: 5 parts), and 4 parts of the phosphate group-containing acrylic resin solution produced in Production Example 15 (solid content: 2 parts) to form a mixture. Next, "UH-752" (product name, manufactured by ADEKA Corporation, a thickener), triethylamine and deionized water were added to the mixture, resulting in an aqueous coating composition No. 1 having a pH of 8.2, a coating material solid content of 48%, and a viscosity of 30 seconds at 20°C as measured with a Ford cup No. 4.

[Examples 2 to 9 and Comparative Examples 1 to 3]

Aqueous coating compositions No. 2 to 12 having a viscosity of 30 seconds at 20°C as measured with a Ford cup No. 4 were produced in the same manner as in Example 1 except that the formulation compositions were those presented in Table 2 below instead.
In Table 2, the "acrylic resin" is written as "Ac resin", the "polyurethane resin" is written as "PU resin", and the "polyester resin" is written as "PE resin".
The storage stability of each of the aqueous coating compositions Nos. 1 to 12 was evaluated based on the rate of change in viscosity which will be described below.
Rate of change in viscosity: evaluated by the rate of change between the viscosity immediately after production and the viscosity after allowing to stand at 40°C for 10 days, based on the viscosity after 1 minute at 60 rpm measured using "LVDV-I" (product name, available from Brookfield, B-type viscometer).

Rate (%) of change in viscosity = ((viscosity after standing at 40°C for 10 days/viscosity immediately after production) - 1| × 100

A rate (%) of change in viscosity of 100% or less is determined to be acceptable.
The results of the rate of change in viscosity as well as the storage stability are presented in Table 2.

[Table 2]

Table 2

| | | | Examples | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 1 | 2 | 3 |
| | | Aqueous coating composition No. | 1 | 2 | 3 | 4 | 5 | 6 | 7 | 8 | 9 | 10 | 11 | 12 |
| Pigment dispersion liquid | | Pigment dispersion liquid No. | P-1 | P-1 | P-1 | P-1 | P-1 | P-1 | P-1 | P-1 | P-1 | P-1 | P-1 | P-1 |
| | Hydroxyl group- and carboxyl group-containing resin (A) | PE resin solution (A2-1) | 20 | 20 | 20 | 20 | 20 | 20 | 20 | 20 | 20 | 20 | 20 | 20 |
| | Pigment | JR-806 | 100 | 100 | 100 | 100 | 100 | 100 | 100 | 100 | 100 | 100 | 100 | 100 |
| | | Carbon MA-100 | 1 | 1 | 1 | 1 | 1 | 1 | 1 | 1 | 1 | 1 | 1 | 1 |
| Hydroxyl group- and carboxyl group-containing resin (A) | | Ac resin particle (A1'-1) | 25 | 25 | 25 | | 25 | 25 | 25 | 25 | 25 | 25 | 25 | 25 |
| | | Ac resin particles (A1"-1) | | | | 25 | | | | | | | | |
| | | Dispersion liquid of PU resin (A3-1) | 20 | 20 | 20 | 20 | | | | 20 | 20 | 20 | 20 | 20 |
| Additional resin | | Dispersion liquid of PU resin (U-1) | | | | | 20 | | | | | | | |
| | | Dispersion liquid of PU resin (U-2) | | | | | | 20 | 20 | | | | | |
| Blocked polyisocyanate compound aqueous dispersion (B) | | Aqueous dispersion (B-1) | 25 | | | | | | | | | | | |
| | | Aqueous dispersion (B-2) | | 25 | | | | | | | | | | |
| | | Aqueous dispersion (B-3) | | | 25 | 25 | 25 | 25 | 30 | | | 30 | | |
| | | Aqueous dispersion (B-4) | | | | | | | | 25 | | | | |
| | | Aqueous dispersion (B-5) | | | | | | | | | 25 | | | |
| | | Aqueous dispersion (B-6) | | | | | | | | | | | 25 | |
| Blocked polyisocyanate compound (b1) | | Compound (b1-2) | | | | | | | | | | | | |

EP 4 481 010 A1

(continued)

| | | | | | | | | | | | | | |
|---|---|---|---|---|---|---|---|---|---|---|---|---|---|
| | Carbon MA-100 | 1 | 1 | 1 | 1 | 1 | 1 | 1 | 1 | 1 | 1 | 1 | 1 |
| Polycarbodiimide compound (C) | CARBODILITE SV02 | 5 | 5 | 5 | 5 | 5 | 5 | 5 | 5 | 5 | | 5 | 5 |
| Melamine resin (D) | CYMEL 325 | 5 | 5 | 5 | 5 | 5 | 5 | | 5 | 5 | 5 | 5 | 30 |
| Curing catalyst | Phosphate group-containing Ac resin solution | 2 | 2 | 2 | 2 | 2 | 2 | 2 | 2 | 2 | 2 | 2 | 2 |
| Storage Stability | Rate of change in viscosity (%) | 80 | 95 | 75 | 81 | 84 | 80 | 95 | 72 | 95 | 45 | 360 | 30 |

[Preparation of Object to Be Coated for Testing]

A cold-rolled steel sheet having undergone a zinc phosphate treatment was electrodeposition-coated with a thermosetting epoxy resin-based cationic electrodeposition coating composition (product name "Elecron GT-10", manufactured by Kansai Paint Co., Ltd.) to give a film thickness of 20 μm, and curing was performed by heating at 170°C for 30 minutes. This resulted in an object to be coated for testing as a steel sheet having an electrodeposition coating film formed thereon.

[Preparation of Coated Sheet for Testing]

Example 10

The object to be coated was electrostatically coated with the aqueous coating composition No. 1 produced in Example 1 by a rotary atomizing-type electrostatic coating machine to give a cured film thickness of 20 μm. The resulting product was then allowed to stand for 5 minutes to form an object to be coated for testing including an uncured intermediate coating film.

Next, the uncured intermediate coating film was electrostatically coated with "WBC-713T No. 202" (product name, manufactured by Kansai Paint Co., Ltd., an acrylic melamine resin-based aqueous basecoat coating material, black color) using a rotary atomizing-type electrostatic coating machine to give a dried film thickness of 15 μm. The resulting product was then allowed to stand for 5 minutes and subsequently preheated at 80°C for 3 minutes to form an object to be coated for testing including an uncured basecoat coating film.

Next, the uncured basecoat coating film was electrostatically coated with "Soflex #520 Clear" (manufactured by Kansai Paint Co., Ltd., product name, a two-component acrylic urethane-based organic solvent-type clear coating material containing hydroxyl group-containing acrylic resin and polyisocyanate compound) to give a dried film thickness of 35 μm. The resulting product was then allowed to stand for 7 minutes to form an object to be coated for testing including a clear coating film.

Then, the object to be coated for testing including the clear coating film was heated at 80°C for 30 minutes to heat and cure the intermediate coating film, the basecoat coating film, and the clear coating film, resulting in a coated sheet for testing.

[Examples 11 to 20 and Comparative Examples 4 to 6]

A coated sheet for testing was prepared in the same manner as in Example 10, except that the type of aqueous coating composition and the heating temperature used in Example 10 were changed to those presented in Table 3 below.

The coated sheets for testing prepared above were evaluated through the following test methods. The evaluation results are indicated in Table 3 below.

[Test Methods]

Low-temperature curability: The pencil hardness of each of the coated sheets for testing prepared in the Examples and Comparative Examples above was measured in accordance with "Scratch Hardness (Pencil Method)" in JIS K 5600-5-4 (1999). The pencil hardness is in the order of 3B < 2B < B < HB < F, and a pencil hardness of HB or above is deemed as acceptable. The evaluation results are listed in Table 3.

Adhesion after water exposure: The coated sheets for testing prepared in the Examples and Comparative Examples above were immersed in warm water at 40°C for 240 hours, and then pulled up to wipe off water on the surfaces thereof. Immediately after the water was wiped off, 100 crosscuts (total number) of 2 mm × 2 mm were formed at the coated surface of the coating film in accordance with JIS K 5600-5-6 (1990). A pressure-sensitive adhesive tape was attached to the surface on which the crosscuts were formed and rapidly peeled off, and then the number of coating film crosscuts remaining on the coated surface (remaining number) was evaluated according to the following criteria. ◎ and ○ are acceptable. The evaluation results are listed in Table 3.

◎: Remaining number/total number = 100/100 with no edge chipping
○: Remaining number/total number = 100/100 with edge chipping
△: Remaining number/total number = 99 to 90/100
×: Remaining number/total number = 89 or less/100

Hardness after water exposure: The coated sheets for testing prepared in the Examples and Comparative Examples above were immersed in 40°C warm water for 240 hours and dried at 20°C for 12 hours. Then, the pencil hardness of the coated surface of each of the coated sheets for testing was measured in accordance with "Scratch Hardness (Pencil Method)" in JIS K 5600-5-4 (1999). A pencil hardness of B or above is deemed as acceptable. The evaluation results are listed in Table 3.

Chipping resistance : The coated sheets for testing prepared in the Examples and Comparative Examples above were placed on a specimen holding table of a gravel test instrument "JA-400 Type" (product name, manufactured by Suga Test Instruments Co., Ltd., chipping resistance tester). 50 g of granite gravel having a grain size of No. 7 was caused to collide with the coated sheets for testing at 0°C and at an angle of 45 degrees from a distance of 30 cm away from the coated sheets for testing by compressed air of 0.39 MPa (4 kgf/cm$^2$). Thereafter, the resulting coated sheet for testing was washed with water and dried, and a cloth adhesive tape (manufactured by Nichiban Co., Ltd.) was attached to the coated surface and peeled off, and then a degree of occurrence of scratches on the coating film was visually observed and evaluated according to the following criteria. ◎ and ○ are acceptable. The evaluation results are listed in Table 3.

◎: The size of a scratch is extremely small, and neither electrodeposited surface nor the base steel sheet is exposed.
○: The size of a scratch is small, and neither electrodeposited surface nor the base steel sheet is exposed.
△: The size of a scratch is small, but the electrodeposited surface or the base steel sheet is exposed.
✕: The size of a scratch is considerably large, and the base steel sheet is also largely exposed.

Glass adhesiveness: A urethane-based adhesive (product name "3740", manufactured by Sunstar Inc., a windshield agent for automobiles) was further applied onto each of the coated sheets for testing prepared in the Examples and Comparative Examples above in a shape having a width of 20 mm, a thickness of 3 mm, and a length of 100 mm or more, and a release paper was placed on the urethane adhesive. Then, the release paper was evenly pressed with a flat sheet. After the flat sheet was removed, the urethane adhesive was left to stand at a temperature of 23 ± 2°C and a humidity of 50 ± 5% for 72 hours and was cured to form an adhesive layer. Thereafter, the release paper was peeled off. Next, each of the coated sheets for testing having the adhesive layer was immersed in a constant-temperature water bath set at 50°C for 240 hours, and then immersed in water at 23°C for 1 hour to be cooled, after which each of the coated sheets for testing was subjected to the following peeling test.

While the cured adhesive layer was pulled by hand in a direction of 90 degrees or more with respect to the coating film, cuts reaching the coating film surface were made in the cured adhesive layer with a cutter knife at intervals of 2 to 3 mm at an angle of approximately 60 degrees with respect to the coating film. A peeling state of the adhesive layer after peeling off the adhesive layer was evaluated according to the following criteria. ◎, ○+ and ○ are acceptable. The evaluation results are listed in Table 3.

◎: No peeling of the adhesive layer was observed, and no exposure of the coating film was observed.
○+: The coating film is not broken, and only the adhesive layer undergoes cohesive failure and is peeled off, but adhesion between the coating film and the adhesive layer is substantially maintained.
○: The coating film underwent cohesive failure and was peeled off, and the width thereof was less than 1 mm from a portion where a cut was made with the cutter knife.
△: The coating film underwent cohesive failure and was peeled off, and the width thereof was 1 mm or greater from a portion where a cut was made with the cutter knife.
✕: Peeling was observed at the interface between the coating film and the adhesive layer.

[Table 3]

Table 3

| | | Aqueous coating composition No. | Heating temperature | Evaluation result | | | | |
|---|---|---|---|---|---|---|---|---|
| | | | | Low-temperature curability | Adhesion after water exposure | Hardness after water exposure | Chipping resistance | Glass adhesiveness |
| Examples | 10 | 1 | 80°C | HB | ○ | B | ○ | ○ |
| | 11 | 2 | 80°C | F | ◎ | HB | ◎ | ○+ |
| | 12 | 3 | 80°C | F | ◎ | B | ◎ | ◎ |
| | 13 | 4 | 80°C | F | ◎ | B | ◎ | ◎ |
| | 14 | 5 | 80°C | F | ◎ | B | ◎ | ◎ |
| | 15 | 6 | 80°C | F | ◎ | B | ◎ | ◎ |
| | 16 | 6 | 70°C | HB | ○ | B | ◎ | ○ |
| | 17 | 6 | 110°C | F | ◎ | HB | ○ | ◎ |
| | 18 | 7 | 80°C | HB | ◎ | B | ◎ | ◎ |
| | 19 | 8 | 80°C | HB | ○ | B | ◎ | ○ |
| | 20 | 9 | 80°C | F | ○ | B | ○ | ○+ |
| Comparative Example | 4 | 10 | 80°C | 2B | Δ | 3B | ○ | × |
| | 5 | 11 | 80°C | 2B | ○ | 3B | ○ | Δ |
| | 6 | 12 | 80°C | HB | × | B | Δ | × |

Although embodiments and examples of the present disclosure have been specifically described above, the present disclosure is not limited to the embodiments described above, and various modifications based on the technical idea of the present disclosure are possible.

For example, the configurations, methods, processes, shapes, materials, numerical values, etc., given in the above-described embodiments and examples are merely examples, and different configurations, methods, processes, shapes, materials, numerical values, etc., may be used when necessary.

Also, the configurations, methods, processes, shapes, materials, numerical values, etc. of the above-described embodiments can be combined with each other without departing from the gist of the present disclosure.

**Claims**

1. An aqueous coating composition comprising:

   a hydroxyl group- and carboxyl group-containing resin (A);
   a blocked polyisocyanate compound aqueous dispersion (B); and
   a polycarbodiimide compound (C),
   wherein the blocked polyisocyanate compound aqueous dispersion (B) comprises a blocked polyisocyanate compound (b1) and at least one anionic surfactant (b2) selected from sulfonic acid salts and sulfuric ester salts.

2. The aqueous coating composition according to claim 1, wherein at least a portion of a blocking agent of the blocked polyisocyanate compound (b1) is an active methylene-based blocking agent.

3. The aqueous coating composition according to claim 1 or 2, wherein a content of the anionic surfactant (b2) is in a range from 0.1 to 10 parts by mass based on 100 parts by mass of a solid content of the blocked polyisocyanate compound (b1).

4. The aqueous coating composition according to any one of claims 1 to 3, further comprising a melamine resin (D).

5. A method of forming a multilayer coating film comprising, in sequence:

(1) applying the aqueous coating composition according to any one of claims 1 to 4 onto an object to be coated to form an intermediate coating film;

(2) applying an aqueous basecoat coating composition onto the intermediate coating film formed in (1) to form a basecoat coating film;

(3) applying a clear coating composition onto the basecoat coating film formed in (2) to form a clear coating film; and

(4) heating and curing all at once the intermediate coating film, the base coating film, and the clear coating film formed in (1) to (3).

## INTERNATIONAL SEARCH REPORT

| International application No. |
|---|
| **PCT/JP2023/005462** |

### A. CLASSIFICATION OF SUBJECT MATTER

*C09D 201/08*(2006.01)i; *B05D 1/36*(2006.01)i; *B05D 7/24*(2006.01)i; *C09D 5/00*(2006.01)i; *C09D 7/63*(2018.01)i; *C09D 161/28*(2006.01)i; *C09D 133/00*(2006.01)n; *C09D 175/04*(2006.01)n
FI: C09D201/08; C09D7/63; C09D5/00 D; C09D161/28; B05D7/24 302T; B05D7/24 302S; B05D7/24 303E; B05D1/36 B; C09D133/00; C09D175/04

According to International Patent Classification (IPC) or to both national classification and IPC

### B. FIELDS SEARCHED

Minimum documentation searched (classification system followed by classification symbols)
C09D201/08; B05D1/36; B05D7/24; C09D5/00; C09D7/63; C09D161/28; C09D133/00; C09D175/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2017/115804 A1 (NIPPON PAINT AUTOMOTIVE COATINGS CO LTD) 06 July 2017 (2017-07-06) <br> claim 1, paragraphs [0047], [0136], [0146], [0150], [0172] | 1-5 |
| Y | JP 2021-101007 A (ASAHI KASEI CORP) 08 July 2021 (2021-07-08) <br> claim 1, paragraphs [0062], [0080]-[0082] | 1-5 |
| A | WO 2013/118575 A1 (KANSAI PAINT CO LTD) 15 August 2013 (2013-08-15) <br> claim 1, paragraphs [0016], [0047] | 1-5 |
| A | JP 2018-130673 A (TOYOTA MOTOR CORP) 23 August 2018 (2018-08-23) <br> claim 1, paragraph [0013], table 2, examples 1-9 | 1-5 |
| A | US 2021/0230448 A1 (COVESTRO INTELLECTUAL PROPERTY GMBH & CO. KG) 29 July 2021 (2021-07-29) <br> claim 1, table 3, example 8 | 1-5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 April 2023** | **16 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2023/005462**

C.    DOCUMENTS CONSIDERED TO BE RELEVANT

| Category* | Citation of document, with indication, where appropriate, of the relevant passages | Relevant to claim No. |
|---|---|---|
| A | CN 111849326 A (HUNAN SOKAN NEW MAT CO LTD) 30 October 2020 (2020-10-30) claim 1, paragraph [0023], table 1, examples 1-6 | 1-5 |

Form PCT/ISA/210 (second sheet) (January 2015)

INTERNATIONAL SEARCH REPORT
Information on patent family members

International application No.

**PCT/JP2023/005462**

| Patent document cited in search report | | | Publication date (day/month/year) | Patent family member(s) | | | Publication date (day/month/year) |
|---|---|---|---|---|---|---|---|
| WO | 2017/115804 | A1 | 06 July 2017 | US | 2020/0283639 | A1 | |
| | | | | claim 1, paragraphs [0084], [0179], [0192], [0196], [0229], example 1 | | | |
| | | | | EP | 3399001 | A1 | |
| | | | | CN | 108713048 | A | |
| JP | 2021-101007 | A | 08 July 2021 | EP | 3783041 | A1 | |
| | | | | claim 1, paragraphs [0115], [0156]-[0159] | | | |
| | | | | CN | 112300365 | A | |
| WO | 2013/118575 | A1 | 15 August 2013 | CN | 104039906 | A1 | |
| | | | | TW | 201341488 | A | |
| JP | 2018-130673 | A | 23 August 2018 | US | 2018/0230326 | A1 | |
| | | | | claim 1, paragraph [0020], table 2, examples 1-9 | | | |
| | | | | CN | 108424698 | A | |
| US | 2021/0230448 | A1 | 29 July 2021 | WO | 2019/238760 | A1 | |
| | | | | EP | 3599254 | A1 | |
| | | | | CN | 110607120 | A | |
| CN | 111849326 | A | 30 October 2020 | (Family: none) | | | |

Form PCT/ISA/210 (patent family annex) (January 2015)

**REFERENCES CITED IN THE DESCRIPTION**

**Non-patent literature cited in the description**

- Polymer Hand Book, 139-179